# EUROPEAN PATENT APPLICATION

(11) **EP 1 312 776 A2**
(43) Date of publication of application: **21.05.2003**
(21) Application number: 02025431.4
(22) Date of filing: 15.11.2002
(51) Int. Cl.: F01N 3/28, B01J 35/04

(54) **Exhaust gas purification system**

(30) Priority: 16.11.2001 JP 2001351231; 16.11.2001 JP 2001351235; 21.11.2001 JP 2001356208; 21.11.2001 JP 2001356222; 21.11.2001 JP 2001356231; 28.11.2001 JP 2001362822
(71) Applicant: ISUZU MOTORS LIMITED, Shinagawa-ku, Tokyo (JP)
(72) Inventor: Gabe Masashi, 8 Tsuchidana, Fujisawa-shi, Kanagawa-Ken (JP); Imai Takehito, 8 Tsuchidana, Fujisawa-shi, Kanagawa-Ken (JP); Ochi Naofumi, 8 Tsuchidana, Fujisawa-shi, Kanagawa-Ken (JP); Koizumi Yoshihisa, 8 Tsuchidana, Fujisawa-shi, Kanagawa-Ken (JP)
(74) Representative: Weber, Dieter, Dr.

(57) **Abstract**

An exhaust gas purification system having a diesel particulate filter (10A) to purify particulate matter in the exhaust gas G from a diesel engine, wherein a an exhaust gas passage (11A,11B) prevention structure (13A) or the like is installed in portions where particulate matter in the exhaust gas is collected and accumulated easily, and, the temperature raises easily by the oxidation of accumulated particulate matter, in said diesel particulate filter.

The allows to avoid DPF melting damage or breakage, by equalizing the heat distribution of the diesel particulate filter (DPF) and preventing an abnormally high temperature from generating partially, and an exhaust gas purification system of excellent endurance can be provided.

## Description

### BACKGROUND OF THE INVENTION

### Field of the Invention

The present invention concerns an exhaust gas purification system having a diesel particulate filter (DPF: Diesel Particulate Filter: designated as DPF hereinafter) for purifying the exhaust gas by collecting particulate matter (particulate matter: designated as PM hereinafter) in the exhaust gas of an engine such as diesel engine or the like.

The amount of exhaust of the PM exhausted from a diesel engine is regulated more and more strictly together with nitrogen oxides (NOx), carbon monoxide (CO), hydrocarbon (HC) and others year after year, and a technology for reducing the amount of PM to be exhausted outside, by collecting the PM by DPF has been developed.

The filter for directly collecting the PM includes ceramic monolithic honeycomb shape wall flow type DPF, or fiber shape type DPF where ceramics or metals are formed into fiber, or others. The exhaust gas purification system using these DPF are installed in the middle of the engine exhaust pipe and purifies the exhaust gas generated in the engine.

### Detailed Description of the Prior Art

However, the DPF is clogged along the collection of PM, and the exhaust gas pressure (exhaust pressure) rises as the collected amount of PM increases, thereby requiring to eliminate collected PM from the DPF. Therefore, several methods and systems have been developed.

Among them, there is a system for eliminating PM by combustion through the heating of the DPF by an electric heater or a burner, or back-washing by flowing the air in the opposite direction. However, in the case of these systems, the fuel efficiency deteriorates, and the regeneration control is difficult, because the PM is burned by supplying heating energy from outside.

In addition, in the case of adopting these systems, often two lines of exhaust passage provided with the DPF are installed, and the PM collection and filter regeneration are repeated alternately, thereby tending to increase the size and cost of the system.

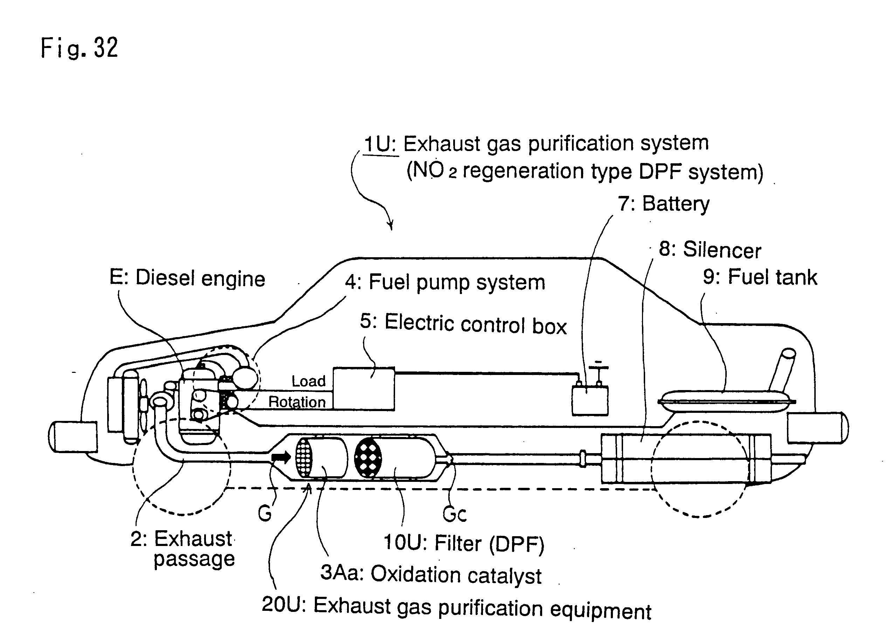

In order to cope with these problems, a continuous regeneration type DPF system as shown in FIGs. 32 to 34 have been proposed.

FIG. 32 shows a continuous regeneration type DPF system (NO₂regeneration type DPF system) 1U by intermediate of nitrogen dioxide (NO₂), and the system 1U is composed of an upstream oxidation catalyst 3Aa and a downstream wall flow type DPF 10U. The upstream side oxidation catalyst 3Aa such as platinum or the like oxidizes nitrogen monoxide (NO) in the exhaust gas and NO₂ obtained by the oxidation oxidizes PM collected by the downstream DPF 10U to obtain carbon dioxide (CO₂,) thereby removing PM.

As the oxidation of the PM by NO₂ is performed with less energy barrier and at a lower temperature than the oxidation of PM by oxygen (O₂), and thereby with a reduced external energy supply, and moreover, within a short period of time. Therefore, the collection of PM and the oxidation and elimination of PM can be repeated consecutively with a single DPF utilizing the heat energy in the exhaust gas. In other words, the DPF 10U can be regenerated by removing PM through oxidation, all the way collecting PM continuously by.

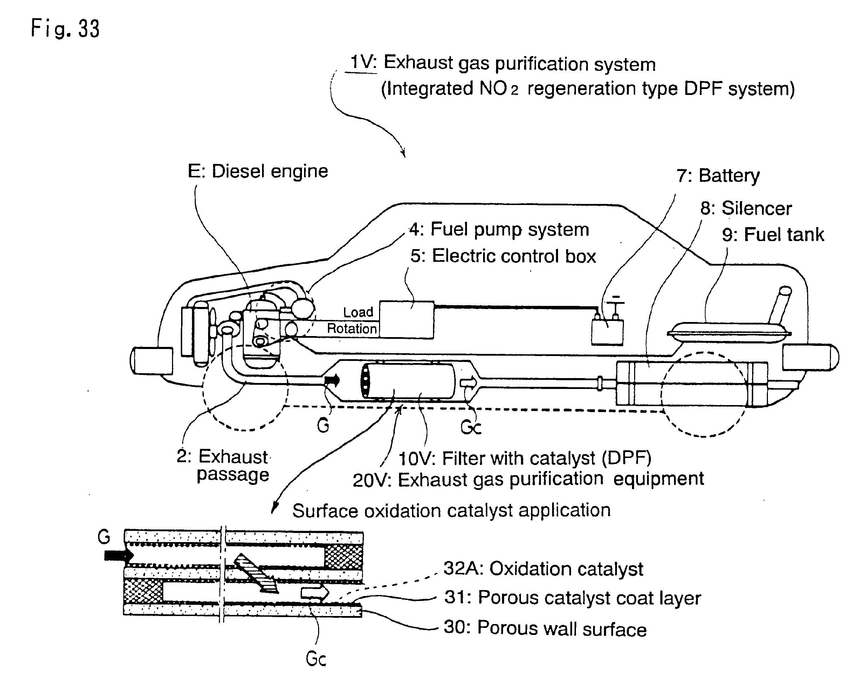

Besides, the continuous regeneration type DPF system (integrated NO₂ regeneration type DPF system) 1V shown in FIG.33 is an improvement of the system 1U shown in FIG. 32. In the system 1V, the oxidation catalyst 32A is applied to the wall surface of a wall flow type DPF 10V, and the oxidation of NO in the exhaust gas and the oxidation of PM by NO₂ are performed on the wall surface. In the composition, the system is simplified, by omitting the upstream side oxidation catalyst 3Aa in FIG. 32.

Then, a continuous regeneration type DPF system (DPF system provided with the PM oxidation catalyst) 1W shown in FIG. 33 applies rear metal oxidation catalyst 32A such as platinum (Pt) or the like and the PM oxidation catalyst 32B to the wall surface of a wall flow type DPF 10W. The oxidation of the PM is performed on the wall surface. The PM oxidation catalyst 32B is a catalyst for direct the PM oxidation by activating O₂ in the exhaust gas, and is composed of cerium dioxide or the like.

For the continuous regeneration type DPF system 1W, the PM is oxidized by NO₂ using mainly a reaction of the oxidation catalyst 32A to oxidize NO to NO₂ in a low temperature oxidation range (about 350 °C to 450 °C). The PM is oxidized by a reaction of the PM oxidation catalyst 32B to oxidize directly the PM by activating O₂ in the exhaust gas, in a central temperature oxidation range (about 400 °C to 600 °C). Also, The PM is oxidized by O₂ in the exhaust gas in a high temperature oxidation range (600 °C or more) higher than the temperature of combustion of the PM by O₂ in the exhaust gas.

These continuous regeneration type DPF systems oxidize and eliminate the PM while collecting the PM by a DPF, by lowering the PM oxidation temperature through the use of the PM oxidation by catalyst or by NO₂.

However, even in these continuous regeneration type DPF systems, it is still necessary to raise the exhaust gas temperature to the order of 350 °C. Consequently, the aforementioned reaction does not generate, and the DPF can not be regenerated by the PM oxidation in an engine operation state with a low exhaust temperature or in an engine operation state with low NO exhaust, because the catalyst activity lowers due to the decrease of the catalyst temperature or NO lacks, and the PM continues to be accumulated, causing the problem of DPF clogging.

For instance, in the idling operation, low speed or extremely low load operation when the engine break is operated on the downhill, the fuel is burned scarcely, a low temperature exhaust gas flows into the exhaust gas purification system, lowering the catalyst temperature and deteriorating the catalyst activity.

Especially, in the case of using a vehicle having a continuous regeneration type DPF system on board is used for door-to-door delivery service or the like dominated by the an urban area traveling, the DPF is clogged easily, because the engine is often operated with a low exhaust gas temperature.

This operating condition is continued, then, the PM is accumulated without regenerating the DPF. And the clogging of the DPF causes the raise of the exhaust gas pressure and the deterioration of the fuel efficiency. Therefore, in the continuous regeneration type DPF system, the engine is controlled to raise the exhaust gas temperature to a temperature activating the catalyst, for eliminating by burning the PM eliminated in the DPF.

In addition, in the clogging of the DPF, the PM is accumulated unevenly causing problems. In short, the PM is not accumulated evenly all over the DPF, but the PM is accumulated more rapidly in an area where the gas flow rate is high and the temperature is locally low than the other areas in the DPF.

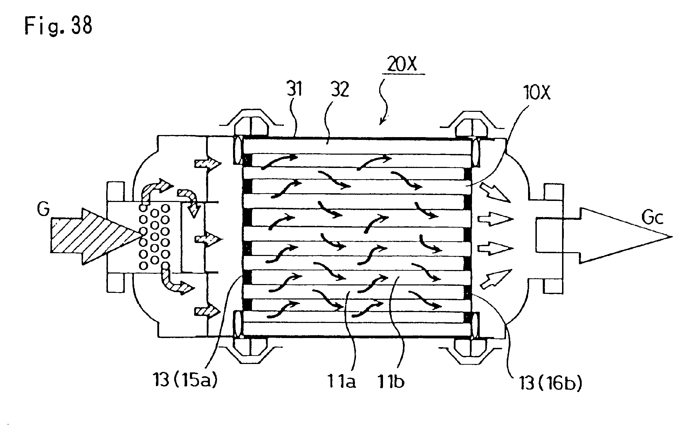

To be more specific, in an exhaust gas purification system 20X as shown in FIG. 38, a cylindrical wall flow type staggered seal DPF 10X is supported by a DPF holding mat 32 and fixed to a cylinder case 31 for introducing an exhaust gas G into all of the cells 11a, 11b from the total upstream surface of the DPF 10X.

The exhaust gas purification system 20X is devised to introduce the exhaust gas G evenly into all of the cells 11a, 11b of the DPF 10X by diffusing the exhaust gas G, however, the exhaust gas flow rate tends to increase in the central portion of the DPF 10X and, also, the outer peripheral side of the DPF 10X tends to be cooled down by heat radiation, decreasing the temperature towards the downstream, and thus lowering the temperature by heat radiation. Consequently, the amount of accumulation increases in the outer peripheral passage portion, and the downstream portion of the central portion of the exhaust gas inflow cross-section of the DPF 10X.

Besides, in the regeneration mode operation, heat generation by the PM combustion becomes uneven. In short, when the exhaust gas becomes hot during the regeneration operation in the regeneration mode operation or changes of the engine operation state, the collected PM becomes hot and is oxidized by O₂ or NO₂ of the like in the exhaust gas; however, as the temperature distribution of the exhaust gas flowing in the DPF or the temperature distribution of the DPF itself being uneven, the timing to start the oxidation of the PM or the heat generated by the oxidation turn to be different according to the place in the DPF.

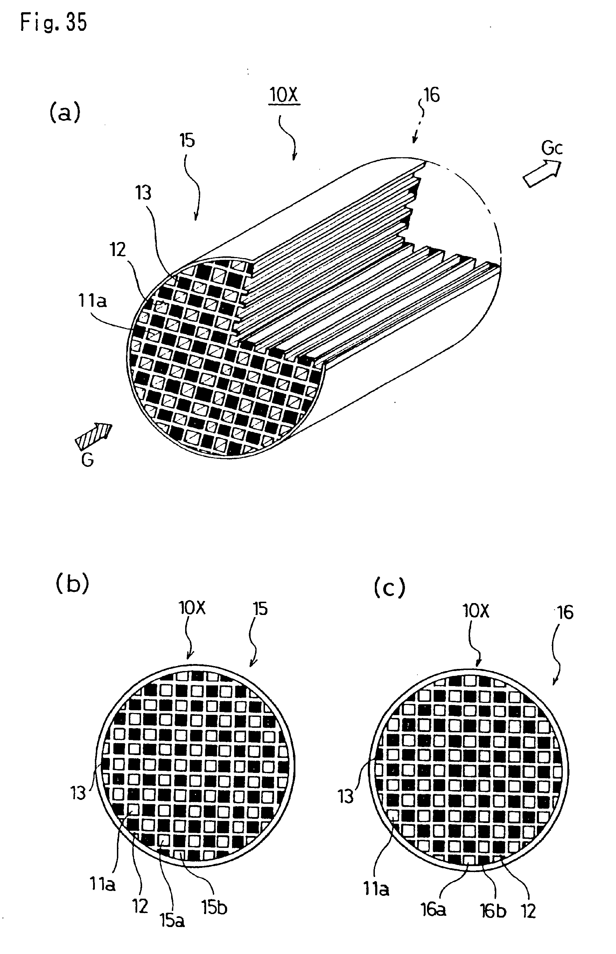

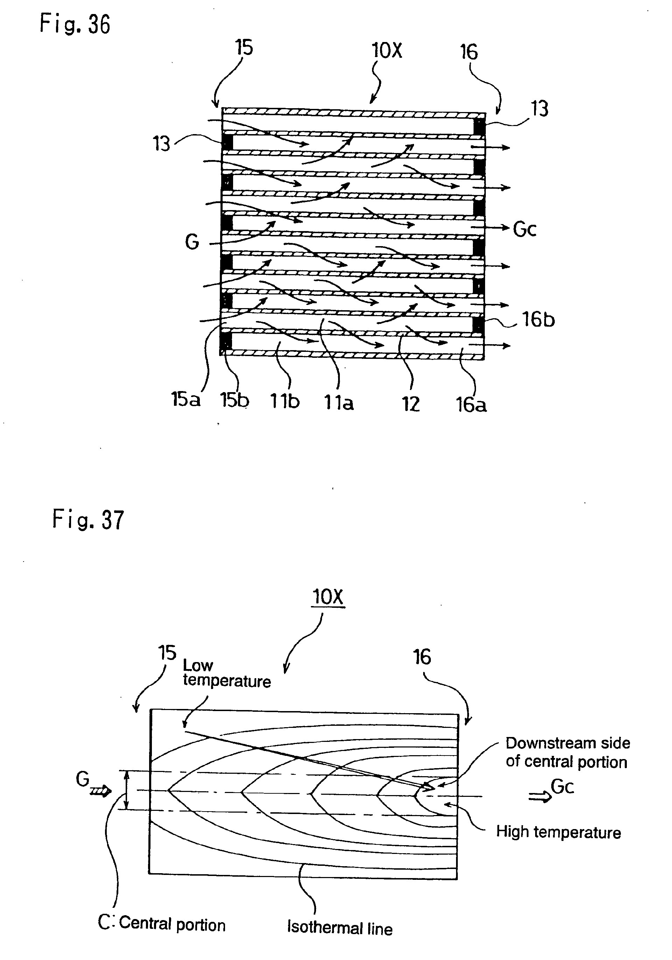

In case of a wall flow type DPF 10X as shown in FIG. 35, as it can be understood from an example of temperature distribution shown in FIG. 37, in the central passage portion, the PM in the exhaust gas is collected and accumulated easily and, moreover, hot exhaust gas enriched in NO₂ flows in during the regeneration mode operation. So, in the central passage portion, the accumulated PM is oxidized actively, and the temperature of this portion is raised. Experiments have established that the downstream portion of the central passage portion becomes especially hot, and the temperature decreases towards the outer periphery or towards the upstream.

In the high temperature generation portion, if the DPF temperature exceeds the heat resistance temperature (about 1450 C°) of the cordierite or the like forming the DPF, melting damage is generated locally and partially. If the melding damage is generated, not only the PM collecting ability lowers, but also the portion susceptible to the PM accumulation moves around the melting damage portion, and the temperature of the peripheral portion increased consecutively to expand the melting damage portion, causing a considerable problem for the exhaust gas purification system.

In addition, the thermal stress increases if the DPF temperature distribution is uneven, and the repeat of this thermal stress generates the fatigue destruction of the DPF, decreasing its life, or the catalyst endurance temperature being exceeded, the catalyst deteriorates abnormally.

The following speculation has been made concerning the local temperature elevation downstream the central portion.

First, in respect of the PM collection, the exhaust gas flow rate is high in the central portion, the exhaust gas is hot and the PM can burn relatively easily in the exhaust gas while, downstream, the exhaust gas temperature lowers due to heat radiation or others, the PM can be collected easily without burning and accumulated downstream, and the clogging proceeds from the downstream to the upstream.

In respect of the PM burning, upstream the central portion, the exhaust gas is relatively hot and the PM can burn easily as oxygen for its combustion is supplied abundantly. Consequently, if the PM burns upstream, the heat generated by its combustion heats the exhaust gas moving downstream and, at the same time, the heat propagated from members of the DPF heats the downstream portion of the DPF, increasing the temperature of the DPF in its downstream portion.

The temperature elevation promotes the PM combustion, increasing the temperature all the more. This is repeated consecutively towards the downstream, the temperature of DPF and exhaust gas temperature increases towards the downstream in the central portion, increasing the downstream temperature in particular.

It is considered that, in addition to the partial increase of the PM accumulation amount and partial increase of heat generation, other factors such as low heat diffusion due to a low heat conductivity of the DPF material or a low heat capacity of DPF increasing the temperature easily, or the like may involved in the partial generation of such a high temperature.

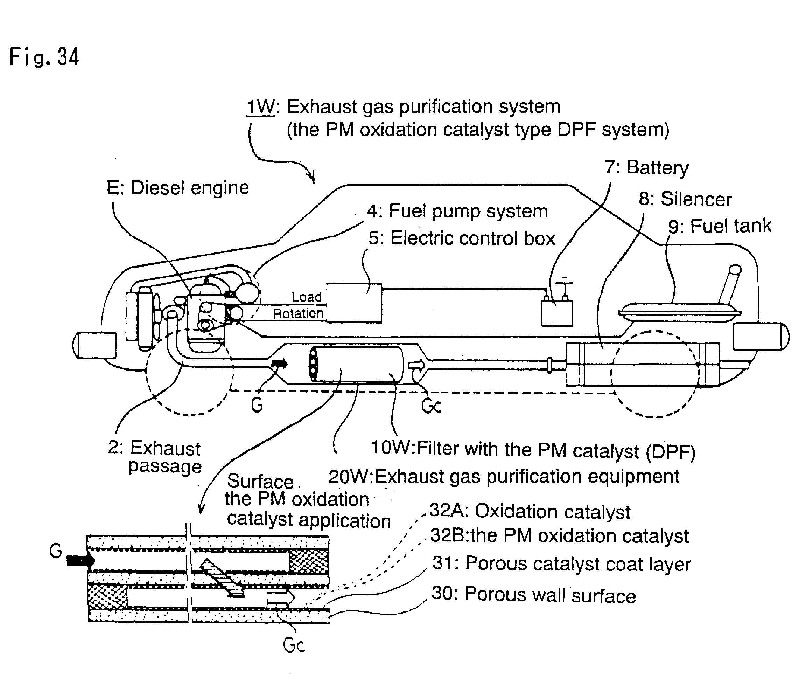

Besides, in a DPF coated with a catalyst used for the continuous regeneration type DPF systems 1V, 1W or others of FIG. 33 or FIG. 34, as the PM oxidation capacity of the catalyst is activated by the inflow of the exhaust gas heated during the regeneration, the PM accumulated in the DPF upstream area starts the oxidation and combustion. As the PM oxidation and combustion due to the catalyst effect are extremely rapid, a large amount of heat is generated within a short period of time, increasing further the temperature of the exhaust gas during the passage through the DPF upstream area.

As the still heated exhaust gas flows in the downstream area (post-stream area) of the DPF and the downstream portion of the DPF is heated by the heat conducted from the DPF members, the PM accumulated in the area oxidizes and burns all of suddenly. Consequently, the temperature of the DPF is raised partially and suddenly in the downstream area.

If they try to lower the amount of the PM accumulation in order to avoid the abnormally high temperature of the DPF, the volume of the DPF increases considerably, making difficult to load it on a vehicle, or, it becomes necessary to perform the regeneration control more frequently, deteriorating the fuel efficiency extremely.

On the other hand, it is known that the progress of DPF clogging can be delayed, if the DPF temperature can be raised even slightly, because the range of normal engine operation state other than the regeneration mode where the PM in the exhaust gas is burned, can be enlarged. Also, it is known that if the DPF temperature distribution can be equalized, a local concentration of the PM accumulation can be avoided, allowing to equalize the heat generated during the combustion of collected PM, prevent a partial generation of high temperature and thus melting damage of DPF.

### SUMMARY OF THE INVENTION

The present invention has an object to provide an exhaust gas purification system of excellent endurance capable of avoiding DPF melting damage or breakage, by equalizing the heat distribution of the diesel particulate filter (DPF) and preventing an abnormally high temperature from generating partially.

In order to achieve the aforementioned object, in the present invention, the structure of portions where particulate matter (the PM) accumulates easily and the temperature raises is partially modified, strong and weak catalyst oxidation power is used, the disposition of the exhaust gas communication passage is devised, and so on.

First, concerning the partial modification of the DPF structure, exhaust gas passage prevention structure, heat absorber, and heat diffusion portion of high heat conductivity are disposed in the portions of the DPF where the PM accumulates easily and the temperature raises easily.

Next, concerning the used of strong and weak catalyst oxidation power, the catalyst oxidation power to be disposed in the DPF is composed so as to decrease in order, step-wise or continuously, from the upstream to the downstream of the DPF, or, from the outer periphery towards the center of the DPF. Besides, the exhaust gas temperature is raised by accelerating the oxidation of NO or other components in the exhaust gas by a strong oxidizing catalyst, in the outer peripheral passage where the exhaust gas cools downs by heat radiation and, at the same time, the exhaust gas temperature elevation is limited by controlling the oxidation of NO or other components in the exhaust gas by a weak oxidizing catalyst, in the central passage where exhaust gas tends to become hot.

Then, concerning devises for the exhaust gas passage, the DPF is heated or kept warm by the exhaust gas, by circulating the total amount of exhaust gas through the outer periphery and the central portion of the DPF, and the DPF is kept hot by the heat-retention effect, to promote the PM combustion.

More in detail, the composition is as follows.

First, in the exhaust gas purification system, the partial modifications of portions of the DPF where the PM tends to accumulate easily and where the temperature tends to raise easily, are performed in the following compositions.
1) In an exhaust gas purification system having a DPF to purify particulate matter in the diesel engine exhaust gas, it is so composed of an exhaust gas passage prevention structure installed in a portion where the PM in the exhaust gas is collected and accumulated easily and, at the same time, the temperature raises easily by oxidation of the accumulated PM, in the DPF.
   According to the composition, as the exhaust gas passage prevention structure for preventing the PM in the exhaust gas from accumulating is installed in the portion where the temperature raises easily when the oxidation of the accumulated PM starts during the regeneration mode operation or the like, the exhaust gas does not flow in the portion. Therefore, the PM does not accumulate in the portion, avoiding the generation of a high temperature, and preventing the melting damage or combustion loss of the DPF.
2) Also, in the aforementioned exhaust gas purification system, the DPF is a wall flow type filter having a number of exhaust gas passages whose periphery is formed of porous wall surface and inlet side and outlet side of the exhaust gas passage sealed in zigzag, and the exhaust gas passage prevention structure is installed against the exhaust gas passage of the central portion of the exhaust gas inflow cross-section of the filter and, at the same time, the exhaust gas passage prevention structure is stop sealed both at the upstream side and the downstream side of the exhaust gas passage.
   The sealing at both sides of the exhaust gas passage of the central portion prevents the exhaust gas from passing through the central portion of the DPF, the PM from accumulating in the central portion, and the melting damage due to a partial high temperature from generating.
   And the decrease of the purification rate can be prevented, because the whole exhaust gas is filtered by making it pass through a wall having the filtering function.
3) Otherwise, in the aforementioned exhaust gas purification system, the DPF is a wall flow type filter having a number of exhaust gas passages whose periphery is formed of porous wall surface and inlet side and outlet side of the exhaust gas passage sealed in zigzag, and the exhaust gas passage prevention structure is installed against the exhaust gas passage of the central portion of the exhaust gas inflow cross-section of the filter and, at the same time, the exhaust gas passage prevention structure is made solid without the exhaust gas passage.
   When the structure of the central portion of the DPF is made solid, the exhaust gas can not pass through the central portion without the exhaust gas passage, preventing the PM from accumulating in the central portion, and the melting damage due to a partial high temperature from generating.
   And, in the case, the heat capacity increases by making the central portion solid, allowing the solid portion to absorb and store heat generated by the combustion of the PM accumulated in the surrounding portion. Moreover, the solid structure of the central portion having a heat conductive function, the heat conduction allows to diffuse heat upstream and avoid a local heating of the surrounding portion.
   Besides, as the solid portion is provided with thermal storage and heat conduction functions, heat stored during the DPF regeneration can be conducted to the upstream side and the surrounding wall surfaces. As the heat conduction functions in a direction to uniform the DPF temperature in respect of time and space, the combustion of particulate matter in the exhaust gas and collected particulate matter can be promoted.
4) In an exhaust gas purification system having a DPF to purify particulate matter in the diesel engine exhaust gas, it is so composed of a heat absorber installed in a portion where the particulate matter in the exhaust gas is collected and accumulated easily and, at the same time, the temperature raises easily by oxidation of the accumulated particulate matter, in the DPF, or in a surrounding portion of the portion.
   The heat absorber is provided with at least one of thermal storage function and heat conduction function and, preferably, both functions.
   According to the composition, as the heat absorber is installed in the portion where the temperature raises easily when the oxidation of the accumulated PM starts during the regeneration mode operation or the like, or in the surrounding portion of the portion, the generated heat can be absorbed by the heat absorber. Therefore, the local generation of a high temperature can be avoided, and the melting damage of the DPF can be prevented.
   Also, heat stored during the DPF regeneration by the thermal storage function of the heat absorber can be conducted to the upstream side and the surrounding wall surface by the heat conduction function of the heat absorber, the DPF temperature is uniformed in respect of time and space, the combustion of particulate matter in the exhaust gas and collected PM can be promoted even during the normal operation, allowing to reduce the amount of PM accumulating in the DPF.
   Consequently, heat can be absorbed, and, diffused by a thick porous wall surface, even if a quantity of heat is generated momentously by a chain combustion of the PM, avoiding a local generation of a high temperature, and preventing the melting damage of the DPF.
   Moreover, the increase of thickness of the porous wall surface decreases the amount of PM accumulating in a portion provided with the porous wall surface, and the heat generated by the combustion decreases as much.
   Furthermore, since the structure composed of the thick porous wall can be formed easily by changing the type when molding the DPF, the expensive manufacturing cost can be avoided.
5) Also, in the aforementioned exhaust gas purification system, the DPF is a wall flow type filter having a number of exhaust gas passages whose periphery is formed of porous wall surface and inlet side and outlet side of the exhaust gas passage sealed in zigzag, and wherein the heat absorber is formed of a thick porous wall surface in the central portion of the exhaust gas inflow cross-section of the filter or the thick porous wall surface surrounding the central portion.
   The thick porous wall surface can be disposed in ring-like or concentric form, lattice or double cross form, radical form or the like, and, in combination thereof, in the cross-section namely when viewed from the exhaust gas inflow direction.
   According to the composition, a heat absorber can be installed, because the heat capacity increases and the thermal storage quantity also increases, by forming thick the thick porous wall surface of the exhaust gas passage (cell) in the central portion or of the portion surrounding the same. Consequently, The temperature rises slowly, even when a quantity of heat is generated momentously by a continuous combustion of the PM, because the thick porous wall surface can absorb heat. Moreover, the increase of heat passing cross-section area improves the heat conductivity and facilitates the heat diffusion. Consequently, a local generation of a high temperature is avoided, allowing to prevent the melting damage of the DPF.
6) In an exhaust gas purification system having a DPF to purify particulate matter in the diesel engine exhaust gas, it is so composed of a heat diffusing member, presenting a higher heat conductivity than the DPF, disposed in contact with a portion where the particulate matter in the exhaust gas is collected and accumulated easily and, at the same time, the temperature raises easily by oxidation of the accumulated particulate matter, in the DPF.
   The DPF for purifying the PM in the exhaust gas is made porous with a ceramics such as cordierite or the like, presents a relatively low heat conductivity and an insufficient heat diffusion, and a local generation of a high temperature is frequent. Therefore, the disposition of the heat diffusing member in contact with the hot portion lowers the temperature of the hot portion through heat diffusion and avoids the melting damage of the DPF.
   At the same time, it is intended to equalize the temperature, especially to equalize the radial temperature distribution by transferring heat to the low temperature portion of the DPF, through the heat diffusing member. Whereby, the PM accumulation speed or the combustion speed can be uniformed. Moreover, portions where the temperature of the DPF is relatively high can be increased in order to promote the combustion of the PM in the exhaust gas or collected PM, allowing to decrease the amount of PM accumulation.
   Consequently, an uneven PM accumulation or an uncontrolled combustion of the unevenly accumulated PM, then, the melting damage of the DPF provoked by the uncontrolled combustion of the PM or the thermal deterioration of the catalyst carried by the DPF can be avoided.
   In the simplest composition of the heat diffusing member is an aeration member composed of mesh or porous flat plate, and the same is installed in contact with the downstream side face including the downstream central portion (in case when the DPF is a wall flow type filter) where the temperature raises easily, and it is so composed to diffuse the heat of the central portion towards the peripheral portion, in the downstream.
7) Then, in the aforementioned exhaust gas purification system, the heat diffusing member is composed using metal, silicon nitride, and silicon carbide as material.
   The heat diffusing member is preferably made of a material presenting a high heat conductivity and an excellent heat resistance, and aluminum titanate or other metals, silicone carbide, silicone nitride, alumina or others ceramics are particularly preferable.
8) In the aforementioned exhaust gas purification system, the DPF is a wall flow type filter having a number of exhaust gas passages whose periphery is formed of porous wall surface and upstream side and downstream side of the exhaust gas passage sealed in zigzag, and wherein the heat diffusing member is composed of a stop sealing plate for sealing the downstream side in zigzag.
   In case where the DPF is a wall flow type filter, the downstream stop seal can be formed with a heat diffusing member. The stop sealing plate is composed by sticking with adhesive to the DPF downstream made of cordierite or the like, and the adhesive absorbs the difference of heat dilatation of the DPF and the stop sealing plate.
9) Also, in the aforementioned exhaust gas purification system, the heat diffusing member is composed of a member having a filter function.
   For the upstream of the DPF where it is desired to burn PM by raising the temperature, a material presenting a low heat conductivity and an excellent thermal storage, and also, a low heat capacity and an excellent heat-up ability, namely cordierite or the like is preferable, in order to raise the temperature relatively rapidly. Then, for the downstream side where the temperature of the exhaust gas and the DPF increases due to the PM combustion in the upstream, in contrast, a ceramic material such as silicone carbide, alumina or the like presenting a high heat conductivity and an excellent thermal diffusion, and also, a large heat capacity and a low heat-up ability, is preferable, in order to avoid an abnormally high temperature.
   The composition allows to raise the temperature relatively rapidly, in the upstream DPF, for accelerating the PM combustion, and to diffuse and store the heat, in the downstream DPF, for avoiding an abnormally high temperature.
   Besides, the DPF and the heat diffusing member having the filter function are bonded in a way to transfer heat regularly; however, as the thermal expansion rate is different in general, they are both bonded with an adhesive, and the adhesive absorbs the difference in thermal expansion.
10) In the aforementioned exhaust gas purification system, both of the DPF and the heat diffusing member are composed of a wall flow type filter having a number of exhaust gas passages whose periphery is formed of porous wall surface, wherein the upstream side and the downstream side of the exhaust gas passage are sealed in zigzag.
   In case where a first normal DPF presenting a relatively low heat conductivity and a second DPF (heat diffusing member having filter function) composed of a heat diffusing member presenting a relatively high heat conductivity are made of a wall flow type filter which is stop sealed in zigzag, the composition becomes simple, and the shape of the bonding face can be made simply as a shape easy for the exhaust gas to flow.
   Next, the use of strong and weak catalyst oxidizing power is performed in the following compositions.
11) The exhaust gas purification system of the present invention is an exhaust gas purification system having a DPF to purify particulate matter in the exhaust gas from a diesel engine by using a catalyst, wherein the oxidation power of the catalyst to be disposed in the DPF is composed so as to decrease in order, step-wise or continuously, from the upstream to the downstream of the DPF.
12) In addition, the exhaust gas purification system of the present invention is an exhaust gas purification system having a DPF to purify particulate matter in the exhaust gas from a diesel engine by using a catalyst, wherein the oxidation power of the catalyst to be disposed in the DPF is composed so as to decrease in order, step-wise or continuously, from the outer periphery towards the center side of the DPF.
13) Otherwise, the exhaust gas purification system of the present invention is an exhaust gas purification system having a DPF to purify particulate matter in the exhaust gas from a diesel engine by using a catalyst, wherein the oxidation power of the catalyst to be disposed in the DPF is composed so as to decrease in order, step-wise or continuously, from the outer periphery of the upstream end towards the central portion of the downstream end of the DPF.
14) Moreover, in the aforementioned exhaust gas purification system, the oxidation power of the catalyst is changed in three or more stages, or, continuously and, at the same time, the portion of the lowest oxidation power of the catalyst is formed by not disposing the catalyst.
15) There, the aforementioned exhaust gas purification system can be applied to an exhaust gas purification system, wherein the DPF is a wall flow type filter having a number of exhaust gas passages whose periphery is formed of porous wall surface and, an inlet side and an outlet side of the exhaust gas passage sealed in zigzag.
   The change of the oxidation power of these catalyst can be realized by changing the kind of catalyst, or even if the same catalyst is used, by modifying the catalyst support density during the coating.
   There, heat generated by the PM oxidation and combustion is supplied to a portion where a catalyst of low oxidation power is disposed, through heat conduction or others from the heated exhaust gas, the upstream side and the outer periphery side to heating up the portion, allowing to activate sufficient even a catalyst of weal oxidation power, oxidize and burn PM.
   Moreover, as the oxidation power of the catalyst in the portion is weak, a rapid PM oxidation and combustion are avoided, preventing the temperature of the portion from raising rapidly. As a result, DPF melting damage, combustion loss, destruction or catalyst deterioration is also prevented.
   The change in the DPF of the oxidation power of the catalyst to be applied to the wall of cells of these DPFs can prevent a local high temperature from generating by avoiding an abnormal combustion of PM, in the case of DPF regeneration consisting in elimination by oxidation of PM collected and accumulated in the DPF, allowing to prevent DPF melting damage, combustion loss, destruction or catalyst deterioration.
16) In an exhaust gas purification system comprising an oxidation catalyst converter in the upstream of the exhaust gas passage and a DPF to purify particulate matter in the exhaust gas from a diesel engine in the downstream, the oxidation catalyst converter and the DPF are formed into a cylinder-shape in which the exhaust gas enters in the upstream end portion and exits from the downstream end portion and, at the same time, it is so composed that the outer peripheral passage portion of the oxidation catalyst converter supports a strong oxidation catalyst, and the central passage portion a weak oxidation catalyst respectively.
   For these strong oxidation catalyst and weak oxidation catalyst, the one presenting a stronger oxidation catalyst effect is called strong oxidation catalyst, and the other presenting a weaker oxidation catalyst effect is called weak oxidation catalyst in comparison of two catalysts. There, both catalysts can be formed by using different kinds of catalyst, or the same kind of catalyst, by changing the support density or support concentration.
   According to the composition concerning a continuous regeneration type DPF system such as NO₂ regeneration type DPF, as the outer peripheral passage portion where the exhaust gas temperature tends to lower easily through heat radiation or the like supports a strong oxidation catalyst, a high oxidation effect promotes the oxidation of PM or NO components or others in the exhaust gas, and raises the exhaust gas temperature largely. On the other hand, the central passage portion where the exhaust gas temperature tends to raise easily supports a weak oxidation catalyst, a low oxidation effect retards the oxidation of PM or NO components or others in the exhaust gas, and raises the exhaust gas temperature slowly.
   Consequently, the exhaust gas which has the higher temperature and is rich in NO₂ flows in the outer peripheral passage, and the exhaust gas which has the lower temperature and is poor in NO₂ flows in the central side passage, enters with central side passage, when the exhaust gas passed through the oxidation catalyst converter enters the DPF.
   Therefore, during the normal mode operation, an exhaust gas hotter in comparison to the central portion flows in the outer peripheral portion which tends to cool down easily through a large heat radiation, in the DPF, equalizing the temperature distribution in the DPF viewed as a whole. The equalization enlarges the area equal or superior to a fixed temperature allowing to burn PM in the exhaust gas, in the DPF, and increases the amount of PM burned without being collected.
   Also, in the regeneration mode operation for increasing NO component and raising the exhaust gas temperature, the oxidation reaction is promoted in the outer peripheral portion of the oxidation catalyst converter, raising the temperature of the exhaust gas passing through the DPF outer peripheral passage portion, and increases NO₂. Consequently, collected PM burns rapidly and the temperature elevation becomes earlier.
   On the other hand, as the oxidation reaction is limited in the central passage portion, the temperature elevation of the exhaust gas passing through the DPF central passage is controlled, and NO₂ is also limited. Therefore, collected PM burns slowly, preventing an abnormally high temperature from generating.
   Consequently, PM oxidation reaction is also promoted in the outer peripheral side and limited in the central portion for a gentle reaction during the regeneration mode operation in the DPF and, therefore, the temperature distribution in a DPF presenting a relatively high heat radiation in the outer peripheral side will be equalized when viewed as a whole.
   There, as the equalization of the DPF temperature distribution enlarges the area equal or superior to a fixed temperature allowing to burn PM in the exhaust gas in the oxidation catalyst converter or the DPF, during the normal engine operation, and enlarges the area where the PM in the exhaust gas is burned without being collected, and, in the regeneration mode operation, an abnormally high temperature will not be generated, and the melting damage can be avoided.
   Moreover, the equalization of temperature distribution in the oxidation catalyst converter and the DPF, the magnitude of generated heat stress is also limited, in a way to improve the endurance performance of the exhaust gas purification system, and its life becomes longer.
17) Or, in an exhaust gas purification system having a DPF to purify particulate matter in the exhaust gas from a diesel engine in the exhaust gas passage and disposing an oxidation catalyst in the exhaust gas passage of the DPF, wherein the DPF is formed into a cylinder-shape in which the exhaust gas enters in the upstream end portion and exits from the downstream end portion and, at the same time, it is so composed that the outer peripheral passage portion of the DPF supports a strong oxidation catalyst, and the central passage portion a weak oxidation catalyst respectively.
   In the composition concerning a continuous regeneration type DPF system such as integrated NO₂ regeneration DPF system, DPF system with PM oxidation catalyst or others also, the oxidation of PM and other components such as NO in the exhaust gas or the oxidation of collected PM is promoted in the outer peripheral passage portion supporting a strong oxidation catalyst and limited in the central passage portion supporting a weak oxidation catalyst, in the DPF, the temperature distribution in the DPF will be equalized when viewed as a whole.
   Consequently, the area allowing to burn PM in the exhaust gas during the normal engine operation, and the melting damage due to an abnormally high temperature combustion which is often generated in regeneration mode operation can also be avoided.
18) Then, in the aforementioned exhaust gas purification system, the strong oxidation catalyst is made of a rear metal system oxidation catalyst, while the weak oxidation catalyst is made of an oxide system oxidation catalyst. According to the composition, the strong oxidation catalyst and the weak oxidation can be supported respectively in the exhaust gas passage by the oxidation catalyst converter, filter with catalyst, or the like.
   Besides, even when the same oxidation catalyst is used, by changing the concentration or density supported by the same, the higher supported concentration can be taken as strong oxidation catalyst, while the lower supported concentration can be taken as weak oxidation catalyst.
19) In the aforementioned exhaust gas purification system, the transversal cross-section area of the outer peripheral passage portion supporting the strong oxidation catalyst is made into 0.5 to 1.0 time of the transversal cross-section area of the central passage portion supporting the weak oxidation catalyst.
   If the portion designed to support a strong oxidation catalyst made of a rear metal system oxidation catalyst and the portion designed to support a weak oxidation catalyst made of an oxide system oxidation catalyst are set to the ratio, the oxidation efficiency by the catalyst effect and a satisfactory temperature distribution formation in the DPF can be maintained in a well-balanced state.
   Namely, when the area ratio is set less than 0.5 times, the central passage portion of the DPF becomes excessively hot, the portion of weak oxidation catalyst becomes dominant decreasing the oxidation efficiency, and enlarging the portion supporting the oxidation catalyst. While, if the area ratio exceeds 1.0 time, outer peripheral passage portion of the DPF becomes excessively hot, causing problems of heat-retention or others.
20) And, it can be applied more effectively to a case where the DPF is a wall flow type filter having a number of exhaust gas passages whose periphery is formed of porous wall surface and an inlet side and an outlet side of the exhaust gas passage sealed in zigzag.
   Other than the wall flow type filter, the DPF formed into a cylinder-shape in which the exhaust gas enters in the upstream end portion and exits from the downstream end portion includes also metal filter or SiC filter.
   It should be noted that oxidation catalyst may be supported by the oxidation catalyst converter or the DPF, by clearly dividing the support range of strong oxidation catalyst and the support range of weak oxidation catalyst, however, it can also be supported in a way to transit progressively form the strong oxidation catalyst to the weak oxidation catalyst step-wise or continuously from the outer periphery side to the central side.
   Then, inventions for the exhaust gas passage are performed by the following composition.
21) In an exhaust gas purification system, wherein the DPF to purify particulate matter in the exhaust gas from an engine is composed of a wall flow type filter having an inlet side and an outlet side of a plurality of cells whose periphery is formed of porous wall surface sealed in zigzag, and wherein an outer peripheral passage is disposed in the outer peripheral portion of the DPF and a central passage in the central portion respectively, and it is so composed that exhaust gas passes through the gas inlet passage, the outer peripheral passage, the cells, the central passage and the gas exit passage in this order.
   The DPF may be a normal DPF, or a DPF with a catalyst such as oxidation catalyst, namely catalytic DPF.
   Also, the outer peripheral passage can be formed simply by adopting a composition wherein stop seals before and after the cell in an area along the outer periphery of the cylindrical body are removed, however a composition to provide a passage between the outer periphery of the DPF and the case of the exhaust gas purification system, namely, to dispose a passage outside the DPF may also be adopted.
   If the outer peripheral passage is composed to be installed out of the DPF, portions important for the purifying and more vulnerable than the other portions can be protected and even when the outside of the exhaust gas purification system is damaged during the transport or installation of the exhaust gas purification system, the purifying capacity will not be damaged.
   The central passage also can be formed simply by adopting a composition wherein stop seals before and after the cell in an area along the central axis of the DPF are removed, however, the DPF may be formed hollow, for using the hollow portion as central passage.
   According to the composition, the whole quantity of exhaust gas flows in the outer peripheral side of the DPF and then passes through the cell of the DPF and further passes through the central passage allowing to heat or keep hot the DPF from the peripheral side with the exhaust gas passing through the outer peripheral passage of the DPF and therefore to uniform the temperature of the whole DPF.
   The heat-retention effect allows to keep high the temperature of the DPF and the temperature of the exhaust gas passing through the cell in the DPF and, thereby, to promote the combustion of PM in the exhaust gas or collected PM. Therefore, the amount of PM accumulation during the normal operation can be reduced. In addition, the period of time of regeneration mode operation for oxidizing and removing collected PM can also be reduced. Then, as the whole quantity of exhaust gas passes through the cell of the DPF, the purifying efficiency is prevented from lowering.
   Moreover, in an exhaust gas purification system, as a central passage is installed in the central portion of the DPF which tends to become hot to let the exhaust gas pass through without collecting PM, the melting damage of the DPF in the portion can be avoided.
22) In the aforementioned exhaust gas purification system, the disposition of oxidation catalyst in the outer peripheral passage permits to heat the outer peripheral side of the DPF with oxidation reaction heat due to the oxidation catalyst, and, to economize the space for disposing the oxidation catalyst.
   In the case, in the case of outer peripheral passage formed by removing stop seals before and after the cell in an area along the outer periphery of the DPF, the oxidation catalyst is supported by the wall surface of the cell; however, in the case of installing a passage outside the DPF, it is preferable to compose as follows.
23) In the aforementioned exhaust gas purification system, for disposing an oxidation catalyst in the outer peripheral passage, the oxidation catalyst is supported by a ceramic or metal honeycomb structure formed separately from the DPF, and the honeycomb structure is disposed in the outer peripheral passage.
   In the case, as the oxidation catalyst support step can be separated form the DPF formation step, the oxidation catalyst can be disposed in the outer peripheral passage relatively easily.
24) In the aforementioned exhaust gas purification system, a relief valve is disposed at least one of a passage wall between an outside chamber communicating the outer peripheral passage with the cell and the gas exit passage, or a passage wall between an inside chamber communicating the cell and the central passage, and the gas inlet passage, so that the exhaust gas bypasses the filter, when the clogging of the filter progresses and increases the pressure.
   The disposition of the relief valve, allows to avoid an excessive elevation of the engine exhaust pressure, when the filer is clogged excessively due to an abnormal accumulation of particulate matter. In addition, if the position of the relief valve, is positioned at the position of the aforementioned passage wall, a canalization for disposing the relief valve becomes unnecessary, allowing to make the exhaust gas purification system more compact.
25) Otherwise, in an exhaust gas purification system wherein the DPF to purify particulate matter in the exhaust gas from an engine is composed of a wall flow type filter having an inlet side and an outlet side of a plurality of cells whose periphery is formed of porous wall surface sealed in zigzag, and wherein an outer peripheral passage is disposed in the outer peripheral portion of the DPF and a central passage in the central portion respectively, and it is so composed that exhaust gas passes through the gas inlet passage, the central passage, the cells, the outer peripheral passage and the gas exit passage in this order.
26) In the exhaust gas purification system, an oxidation catalyst is disposed in the central passage.
27) Then, for disposing an oxidation catalyst in the central passage, the oxidation catalyst is supported by a ceramic or metal honeycomb structure formed separately from the filter, and the honeycomb structure is disposed in the central passage.
28) Further, in the aforementioned exhaust gas purification system, a relief valve is disposed at least one of a passage wall between an outside chamber communicating the cell and the outer peripheral passage and the gas inlet passage, or a passage wall between an inside chamber communicating the central passage and the cell, and the gas exit passage, so that the exhaust gas bypasses the filter, when the clogging of the filter progresses and increases the pressure.
   The outer peripheral passage or central passage in these compositions can be formed similarly as the above-mentioned exhaust gas purification system, and the composition is different from the above-mentioned exhaust gas purification system in that the exhaust gas passes first through the central passage, then passes in the cell and passes through the outer peripheral passage, and, that the portion where the oxidation catalyst is disposed is the central passage.
   In these compositions, as the central passage is upstream, and, the oxidation catalyst is also disposed in the central passage, the central portion side is heated by the heat of the exhaust gas and the heat generated by the oxidation reaction of substances in the exhaust gas and, thereafter, the exhaust gas having passed through the cell flows through the outer peripheral passage and the peripheral portion of the DPF can be kept hot and heated with the exhaust gas.
29) A disposition of a thermal insulation layer on the outer surface of the aforementioned exhaust gas purification system can enhance the thermal retention effect and, at the same time, prevent thermal damage of peripheral vehicle components disposed outside the exhaust gas purification system by the heat from the exhaust gas. Besides, the thermal insulation layer having also a normal noise reduction effect can serve for prevention of noise.

### BRIEF DESCRIPTION OF THE DRAWINGS

FIG. 1 is a schematic composition drawing of a DPF of an exhaust gas purification system of a first embodiment according to the present invention, (a) is a perspective view including a partial cross-section, (b) is a front view, and (c) is a back view;
FIG. 2 is a schematic lateral cross-section of the DPF of FIG. 1;
FIG. 3 is a schematic composition drawing of a DPF of an exhaust gas purification system of a second embodiment according to the present invention, (a) is a perspective view including a partial cross-section, (b) is a front view, and (c) is a back view;
FIG. 4 is a schematic lateral cross-section of the DPF of FIG. 3;
FIG. 5 is a schematic composition drawing of a DPF of an exhaust gas purification system of a third embodiment according to the present invention, (a) is a front view, (b) is a back view and (c) is a lateral cross-section;
FIG. 6 is a schematic composition drawing of a DPF of an exhaust gas purification system of a fourth embodiment according to the present invention, (a) is a front view, and (b) is a back view;
FIG. 7 is a schematic composition drawing of a DPF of an exhaust gas purification system of a fifth embodiment according to the present invention, (a) is a front view, and (b) is a back view;
FIG. 8 is a schematic perspective view of a DPF of an exhaust gas purification system of a sixth embodiment according to the present invention including a partial cross-section;
FIG. 9 is a schematic lateral cross-section of the DPF of FIG. 8;
FIG. 10 is a schematic perspective view of a DPF of an exhaust gas purification system of a seventh embodiment according to the present invention including a partial cross-section;
FIG. 11 is a schematic lateral cross-section of the DPF of FIG. 10;
FIG. 12 is a schematic perspective view of a DPF of an exhaust gas purification system of an eighth embodiment according to the present invention including a partial cross-section;
FIG. 13 is a schematic lateral cross-section of the DPF of FIG. 12;
FIG. 14 is a schematic lateral cross-section showing another example of the DPF of the exhaust gas purification system of the eighth embodiment according to the present invention;
FIG. 15 is a schematic lateral cross-section showing another example of the DPF of the exhaust gas purification system of the eighth embodiment according to the present invention;
FIG. 16 is a schematic lateral cross-section showing another example of the DPF of the exhaust gas purification system of the eighth embodiment according to the present invention;
FIG. 17 is a schematic isothermal diagram showing a state of temperature distribution in a lateral cross-section of the DPF of the exhaust gas purification system of the sixth embodiment according to the present invention;
FIG. 18 is a schematic perspective view of a DPF of an exhaust gas purification system of a ninth embodiment according to the present invention including a partial cross-section;
FIG. 19 is a schematic perspective view of a DPF of an exhaust gas purification system of a tenth embodiment according to the present invention including a partial cross-section;
FIG. 20 is a schematic perspective view of a DPF of an exhaust gas purification system of an eleventh embodiment according to the present invention including a partial cross-section;
FIG. 21 is a flow chart diagram showing an example of regeneration control flow of a continuous regeneration type DPF system according to the present invention;
FIG. 22 is a lateral cross-section showing a schematic composition of an exhaust gas purification system of a twelfth embodiment according to the present invention;
FIG. 23 is a schematic perspective view of an oxidation catalyst converter of FIG. 22 including a partial cross-section;
FIG. 24 is a lateral cross-section showing a schematic composition of an exhaust gas purification system of a thirteenth embodiment according to the present invention;
FIG. 25 is a lateral cross-section showing a schematic composition of an exhaust gas purification system of a fourteenth embodiment according to the present invention;
FIG. 26 is a schematic composition drawing of an exhaust gas purification system of a fifteenth embodiment according to the present invention, wherein an outer peripheral passage is disposed outside the DPF;
FIG. 27 is a schematic composition drawing of the exhaust gas purification system of the fifteenth embodiment according to the present invention, wherein the outer peripheral passage is formed by removing stop seals from the outer peripheral portion of the DPF;
FIG. 28 is a schematic composition drawing of the exhaust gas purification system of the fifteenth embodiment according to the present invention, wherein a honeycomb structure is inserted in the outer peripheral passage provided separately from the DPF;
FIG. 29 is a schematic composition drawing of an exhaust gas purification system of a sixteenth embodiment according to the present invention, wherein an central passage is composed of a hollow portion of the DPF;
FIG. 30 is a schematic composition drawing of the exhaust gas purification system of the sixteenth embodiment according to the present invention, wherein a honeycomb structure provided separately is inserted in the hollow portion of the DPF;
FIG. 31 is a schematic composition drawing of the exhaust gas purification system of the sixteenth embodiment according to the present invention, wherein a honeycomb structure is attached to an inlet member, and inserted in the hollow portion of the DPF during the mounting;
FIG. 32 is a composition diagram showing an example of a continuous regeneration type DPF system where an oxidation catalyst of the prior art is disposed;
FIG. 33 is a composition diagram showing an example of a continuous regeneration type DPF system provided with a DPF with oxidation catalyst of the prior art;
FIG. 34 is a composition diagram showing an example of a continuous regeneration type DPF system provided with a DPF with PM oxidation catalyst of the prior art;
FIG. 35 is a schematic composition drawing of a wall flow type DPF, (a) is a perspective view including a partial cross-section, (b) is a front view, and (c) is a back view;
FIG. 36 is a schematic lateral cross-section of the DPF of FIG. 35;
FIG. 37 is a schematic isothermal diagram showing a state of temperature distribution, during the regeneration of the DPF of the prior art; and
FIG. 38 is a lateral cross-section of an exhaust gas purification system of the prior art to which the DPF of FIG. 35 is attached.

### DETAILED DESCRIPTION OF THE PREFERRED EMBODIMENT

Now, the exhaust gas purification system of the embodiments 1 to 16 according to the present invention shall be described taking a case where the DPF is a wall flow type filer as example and referring to drawings.

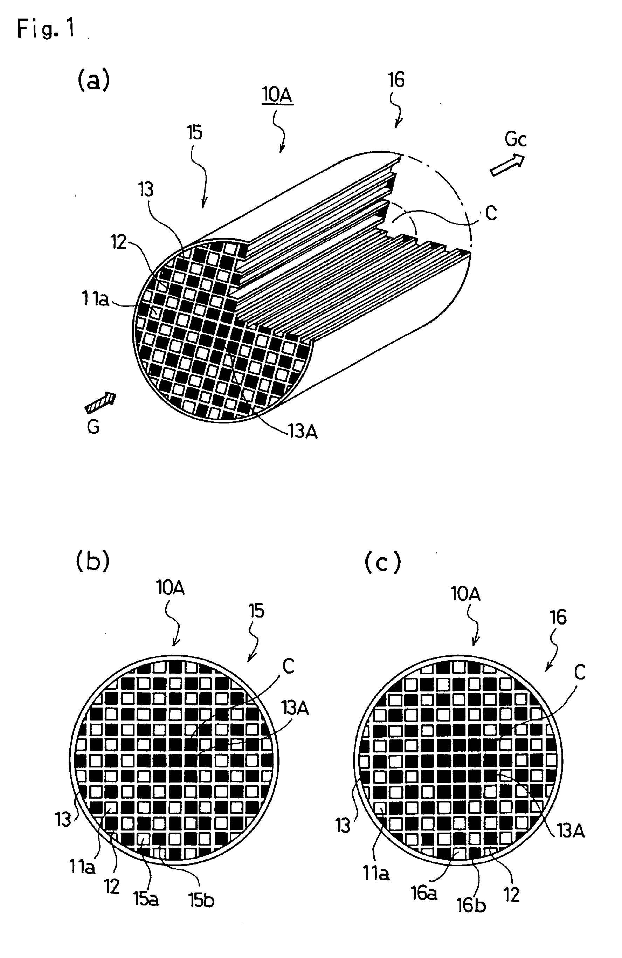

First, the exhaust gas purification system of the embodiments 1 to 8 concerning partial modifications of portions of the DPF where particulate matter (PM) tends to accumulate easily and where the temperature tends to raise easily shall be described referring to FIG. 1 to FIG. 17.

The wall flow type DPF used for the exhaust gas purification system of the first and the second embodiments, as shown in FIG 1 to FIG 4, has a number of exhaust gas passages 11a, 11b whose periphery is formed of porous wall surface 12 and, at the same time, is formed by stop sealing in zigzag 13 an inlet side 15 and an outlet side 16 of the exhaust gas passages (cells) 11 a, 11 b, and is used by incorporating in an exhaust gas purification systems 1A, 1B, 1C or others as shown in FIG. 32 to FIG. 34.

There, in these embodiments, it is composed by installing an exhaust gas passage prevention structure, against the exhaust gas passages 11a, 11b in the central portion of the exhaust gas inflow portion of the DPF 10A, 10B.

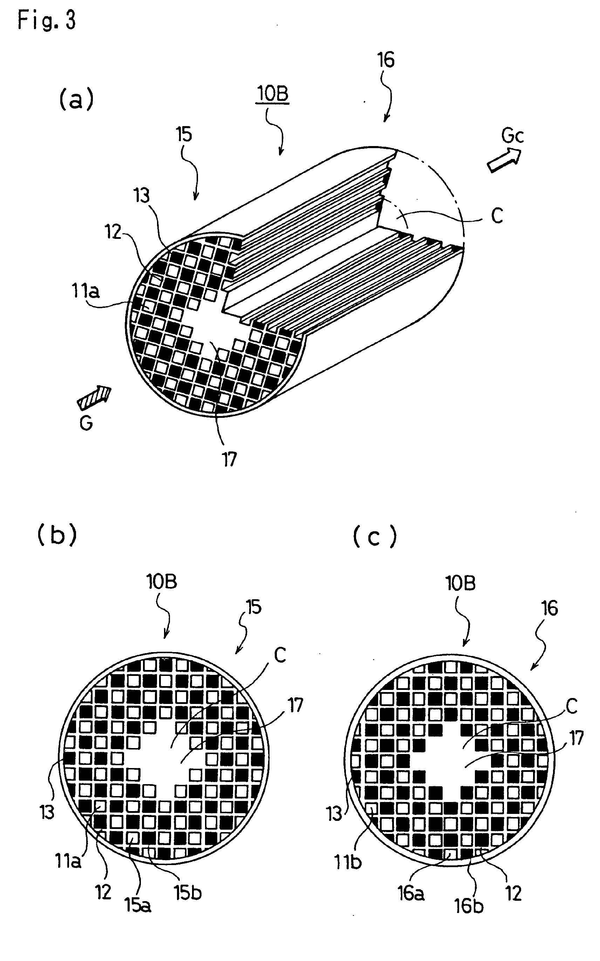

It should be noted that, in FIG. 1 and FIG. 3, the exhaust gas passage prevention structure is installed, against thirteen exhaust gas passages 11 a, 11b in the central portion.

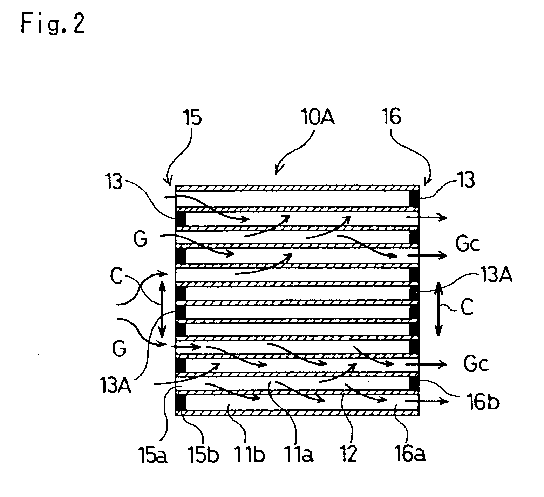

First, the DPF 10A to be used for the exhaust gas purification system of the first embodiment shown in FIG. 1 and FIG. 2 shall be described.

In the composition, the exhaust gas passage prevention structure is composed by stop sealing 13A both the upstream side and the downstream side of the cell 11a, 11b of the central portion C of the DPF 10A, so that the exhaust gas G cannot enter in the cells 11 a, 11b of the central portion C thereof.

Thanks to the composition, as the exhaust gas G does not pass through the cell 11a, 11b of the central portion C, PM in the exhaust gas G will not be collected and accumulated. Therefore, a local high temperature due to combustion of the collected PM is prevented from generating, avoiding the melding damage of the central portion C of the DPF 10A.

Also, the obstruction of the passage of the exhaust gas G makes the exhaust gas G flowing toward the central portion C is directed around the central portion C of the stop seal 13A, the whole exhaust gas G can be filtered by making it pass through a wall face 12 having the filtering function of the DPF 10A.

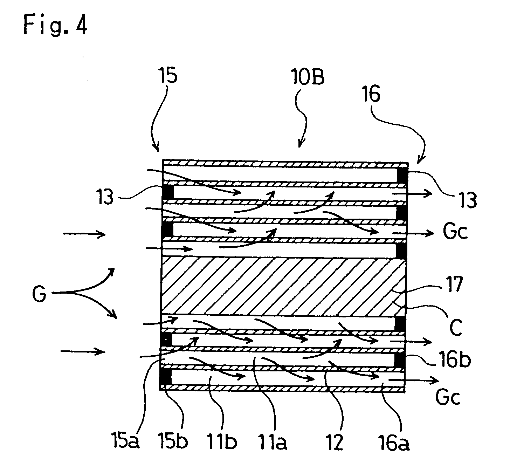

Next, the DPF 10B to be used for the exhaust gas purification system of the second embodiment shown in FIG. 3 and FIG. 4 shall be described.

In the composition, an exhaust gas passage prevention structure is installed by forming the central portion C of the DPF 10B with a solid structure 17, and composing so that the exhaust gas passage be absent in the central portion C.

Due to the composition, as there is no more passage for the exhaust gas G to pass, in the central portion C, PM also will not accumulate no more.

According to the composition, effects similar to the DPF 10A used for the first embodiment can be expected, and furthermore, the formation of the solid structure 17 increases the heat capacity, allowing to absorb and accumulate by the solid portion C heat generated through combustion of PM accumulated around the central portion C and also to diffuse by heat conduction, hence, a local high temperature around the central portion C is prevented.

Also, as the solid portion 17 has heat accumulating function and heat conducting function, and acts in a temporal and spatial homogenization direction of the DPF temperature, by conducting accumulated heat to the upstream side and the surrounding wall face, thus allowing to promote the combustion of PM in the exhaust gas G and collected PM.

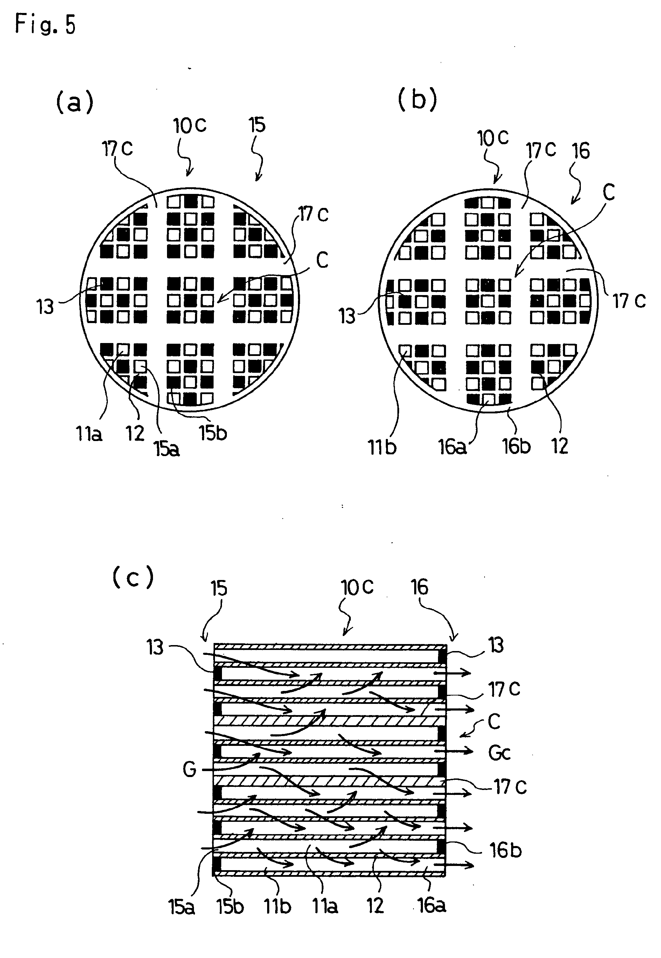

Next, the DPF for the exhaust gas purification system of third to fifth embodiments shown in FIG. 5 to FIG. 7, is composed by installing a heat absorbers 17C, 17D, 17E in the central portion C of the exhaust gas inflow portion and in the surrounding portion of the central portion C, of the DPFs 10C, 10D, 10E.

First, the DPF 10C to be used for the exhaust gas purification system of the third embodiment shown in FIG. 5 shall be described.

In the composition, a heat absorber 17C formed by increasing the wall thickness of the porous wall face 12 is provided in a well curb shape, surrounding the central portion C of the exhaust gas inflow face of the DPF 10C, namely portion where the temperature tends to raised, when the oxidation of accumulated particulate matter has started, during the regeneration mode operation or others.

Due to the composition, heat generated in the central portion C is absorbed and accumulated by the heat absorber 17C, and conducted to the outer peripheral portion, preventing the central portion C from becoming partially hot, and the DPF 10C from melting damage.

Also, as heat accumulated during the DPF regeneration by the heat accumulating function of the heat absorber 17C is conducted to the upstream side and the surrounding wall face 12 by the heat conducting function of the heat absorber 17C, the temperature of the DPF 10C is directed to a temporal and spatial homogenization direction, allowing to promote the combustion of particulate matter in the exhaust gas and the combustion of collected particulate matter during the normal operation. Consequently, the amount of accumulation of particulate matter decreased, the regeneration mode operation interval becomes longer, allowing to improved the durability and the life.

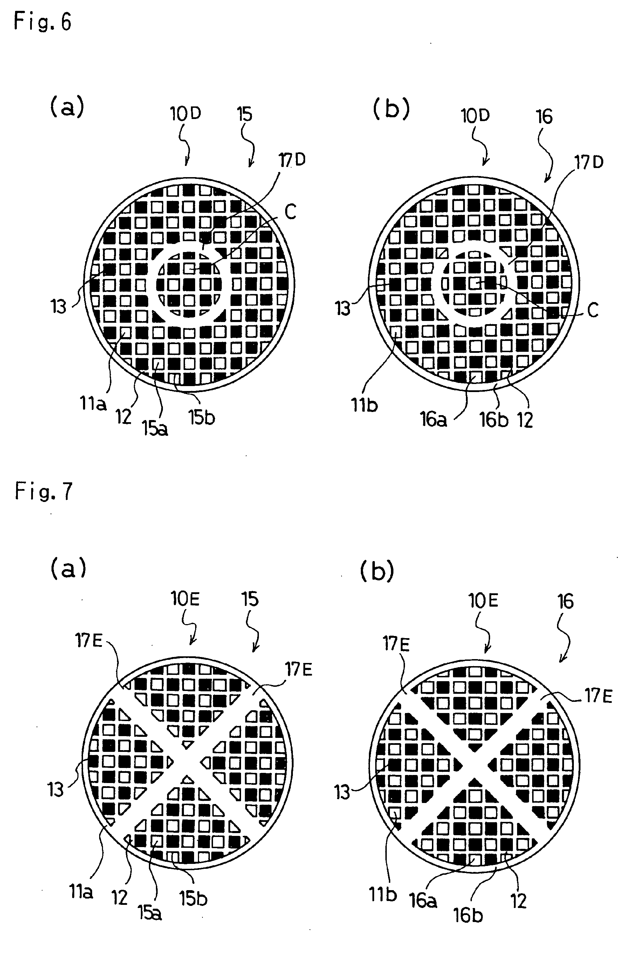

Next, the DPF 10D to be used for the exhaust gas purification system of the fourth embodiment shown in FIG. 6 shall be described.

In the composition, a heat absorber 17D is provided cylindrically surrounding the central portion C of the DPF 10D. The heat absorber 17D is made of the same material as the porous wall face 12 and formed similarly, but heat accumulating function and heat conducting function are improved compared to the porous wall face 12, by increasing the wall face thickness.

Due to the composition, heat generated in the central portion C is absorbed and accumulated by the heat absorber 17D, preventing the central portion C from becoming partially hot, and thereby the melting damage of DPF can be avoided.

Next, the DPF 10E to be used for the exhaust gas purification system of the fifth embodiment shown in FIG. 7 shall be described.

In the composition, a heat absorber 17E is provided crossing at the central portion C of the DPF 10E. The heat absorber 17E is made of the same material as the porous wall face 12 and formed similarly, but heat accumulating function and heat conducting function thereof are improved compared to the porous wall face 12, by increasing the wall thickness.

In accordance with the composition, the heat generated through combustion of PM accumulated around the central portion C cab be absorbed and accumulated by the heat absorber 17E and diffused by the heat transmission, thereby preventing the surrounding of the central portion C from heating locally.

Also, as the heat absorber 17E has heat accumulating function and heat conducting function, and acts in a temporal and spatial homogenization direction of the DPF temperature, by conducting accumulated heat to the upstream side and the surrounding porous wall face, thus allowing to promote the combustion of PM in the exhaust gas G and collected PM.

Furthermore, in the composition, as the exhaust gas passage 11 a, 11 b in the central portion C is reduced, PM accumulating in the central portion C also reduces.

Though in the aforementioned description, the heat absorber 17C, 17D, 17E is made of the same material as the porous wall face 12; however, it may also made of other material, for instance, stainless steel of metal material or ceramic material. In addition, concerning the shape, it may be molded integrally, or may be formed separately and then integrated by assembly.

The disposition of heat absorber 17C, 17D, 17E is not limited to well curb, lattice, concentric, ring or radical form, but it may also be disposed in another form or in a combined form.

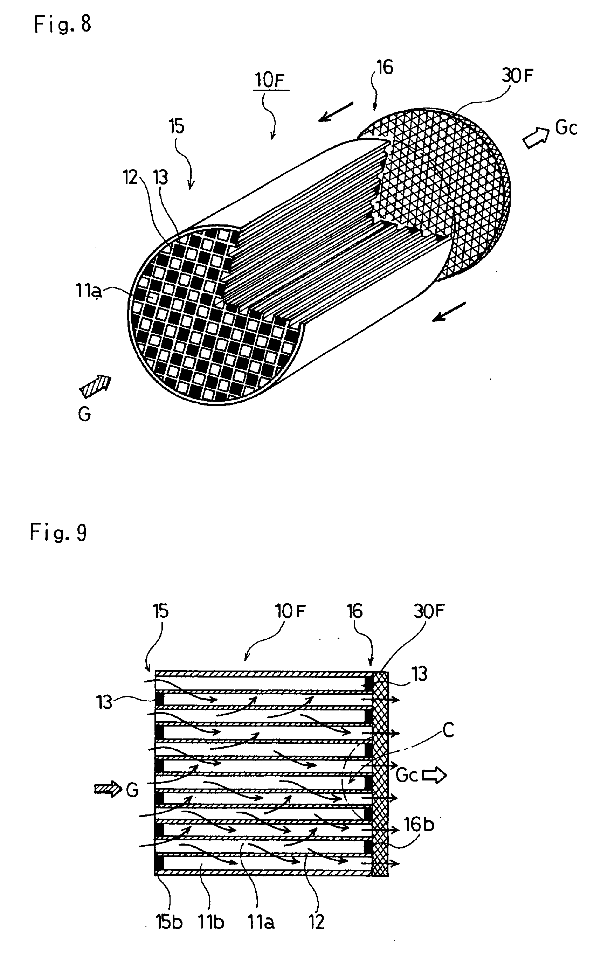

Then, the DPF of the exhaust gas purification system of the sixth to eighth embodiment shown in FIG. 8 to FIG. 16 is composed by providing a heat diffusion member 30F to 30L, against the downstream side of the DPF 10F, 10G.

The heat diffusing member to be used for the exhaust gas purification system of the sixth embodiment is an aeration member 30F such as aerating heat resistant metal mesh or porous flat plate using alloy of aluminum, aluminum titanate or other metals, silicone carbide, alumina or others ceramics as material, abutted to the face of the downstream side 16 of the DPF 10F. It may bonded by an adhesive, but it may also be disposed so as to come into contact. Namely, it is so disposed to improve the efficiency of heat conduction.

The heat diffusion member 30F may be a single plate, but a plurality of members may also be laminated. Especially, in the case of metal mesh, it is laminated preferably in order to secure an appropriate heat conduction characteristic and heat capacity.

If the composition is adopted, the difference of heat expansion between the DPF 10F and the heat diffusion member 30F can be absorbed by the friction between planes each other.

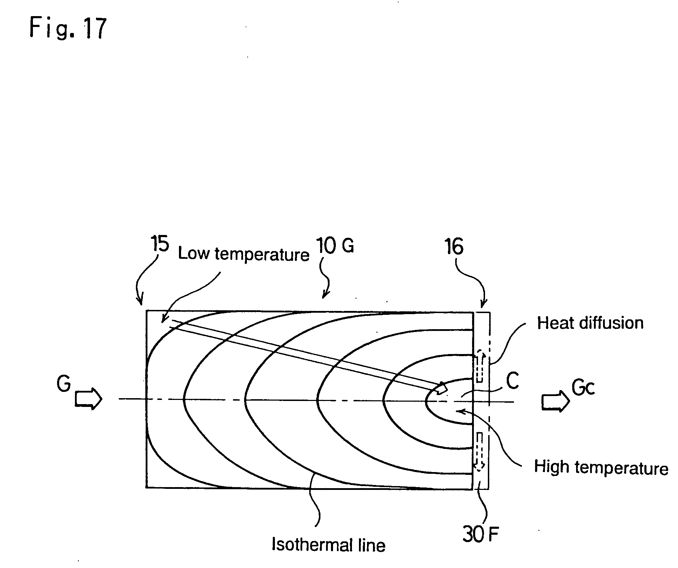

There, according to the composition, as the heat can be diffused in a direction to uniform the DPF heat distribution, especially radial heat distribution, and, particulate matter (PM) collection speed and combustion speed, a temperature distribution as shown in FIG. 17 can be obtained. The comparison between the temperature distribution and the heat distribution of the DPF 10X of the prior art as shown in FIG. 37 demonstrates a considerable improvement.

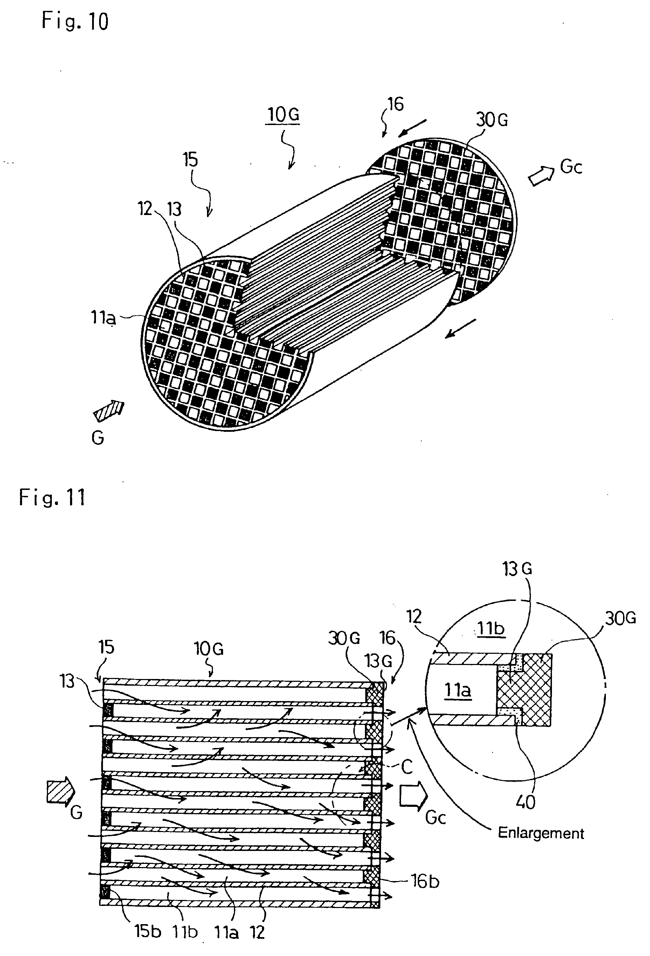

As shown in FIG. 10 and FIG. 11, the heat diffusing member to be used for the seventh embodiment is composed of a stop sealing plate 30G having a stop sealing protrusion 13B disposed in zigzag, using alloy of aluminum, aluminum titanate or other metals, silicone carbide, alumina or others ceramics as material.

The stop sealing plate 30G is inserted and bonded from the downstream side 16 of the DPF 10G, and the outlet portion 16b of the downstream side 16 of the DPF 10G is sealed in zigzag with the stop sealing protrusion 13G. In the composition, the bonding is realized by an adhesive 40, for absorbing the generation of gap due to the difference of heat expansion between the DPF 10G and the stop sealing plate 30G.

There, according to the composition, the heat can be diffused in a direction to uniform the DPF heat distribution, especially radial heat distribution, and, particulate matter (PM) collection speed and combustion speed, by the stop sealing plate 30G.

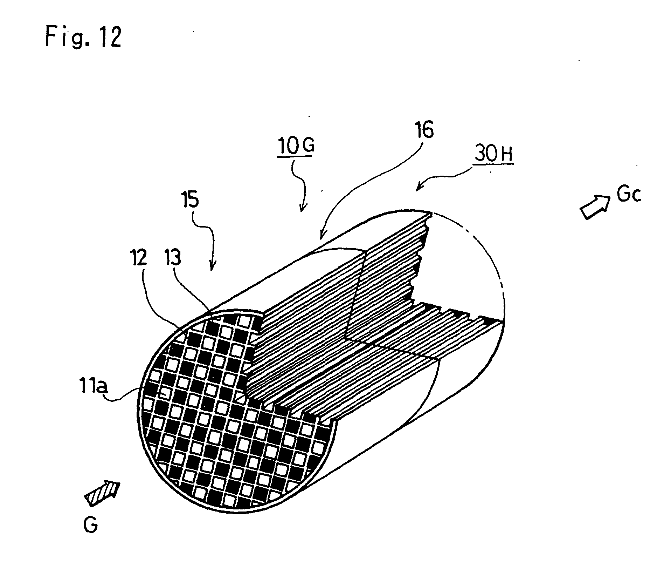

Then, as shown in FIG. 12 to FIG. 17, the heat diffusing member to be used for the eighth embodiment is composed by connection a wall flow type second DPF 30H, 30I, 30J formed by using aluminum alloy, aluminum titanate or other metals, silicone carbide, alumina or others ceramics as material, to the downstream side of a wall flow type first DPF 1 OF, 10G composed of cordierite.

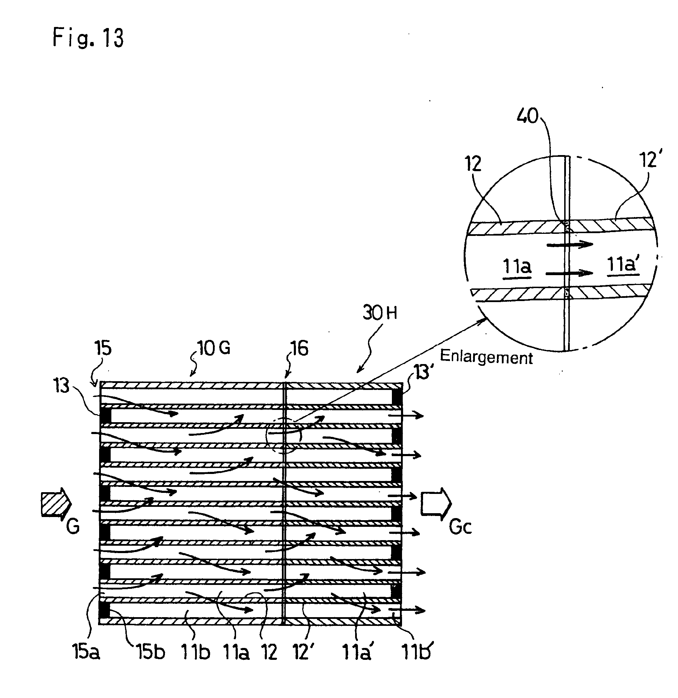

First, in a composition shown in FIG. 12 and FIG. 13, the downstream side 16 of the first DPF 10G is not stop sealed, the second DPF 30H is composed of a mesh of cell same as the first DPF 10G, the upstream side is not stop sealed and the position of the downstream side well curb-like stop seal 13' is differentiated from the position of the upstream side stop seal 13 of the first DPF 10G. Namely, it is so composed that the upstream side cell 11 a of the first DPF 10G and the upstream side cell 11 a' of the second DPF 30H are connected.

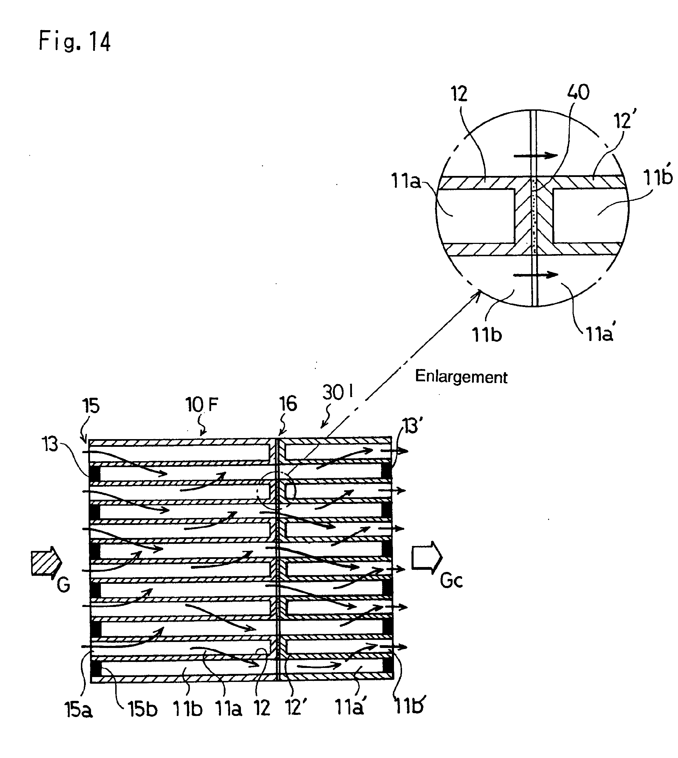

On the other hand, in another composition shown in FIG. 14, a first DPF 10F wherein an upstream side 15 and a downstream side 16 are stop sealed respectively, and a second DPF 30I wherein an upstream side and a downstream side are also stop sealed are bonded with an adhesive 40.

The second DPF 30I is composed of a mesh of cell same as the first DPF 10G, and formed so that the position of the upstream side well curb-like stop seal 13' will be the same position as the position of the downstream side stop seal 13 of the first DPF 10G. Namely, it is so composed that the downstream side cell 11b of the first DPF 10G and the downstream side cell 11a' of the second DPF 30I are connected.

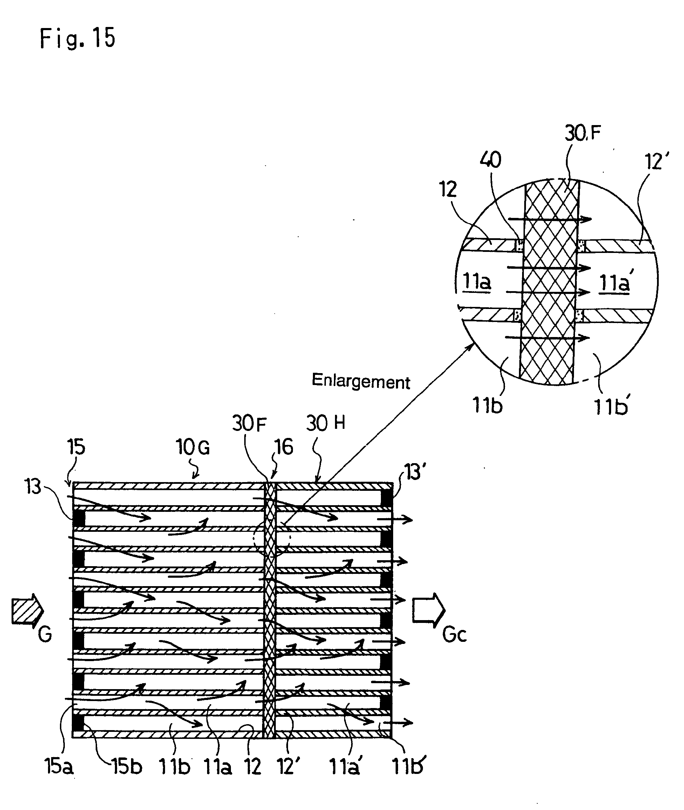

Then, another composition shown in FIG. 15 is substantially same as the composition of FIG. 13, but an aeration member 30F which is a heat diffusion member is disposed between the first DPF 10F and the second DPF 30H. The radial heat conduction is promoted through the aeration member 30F.

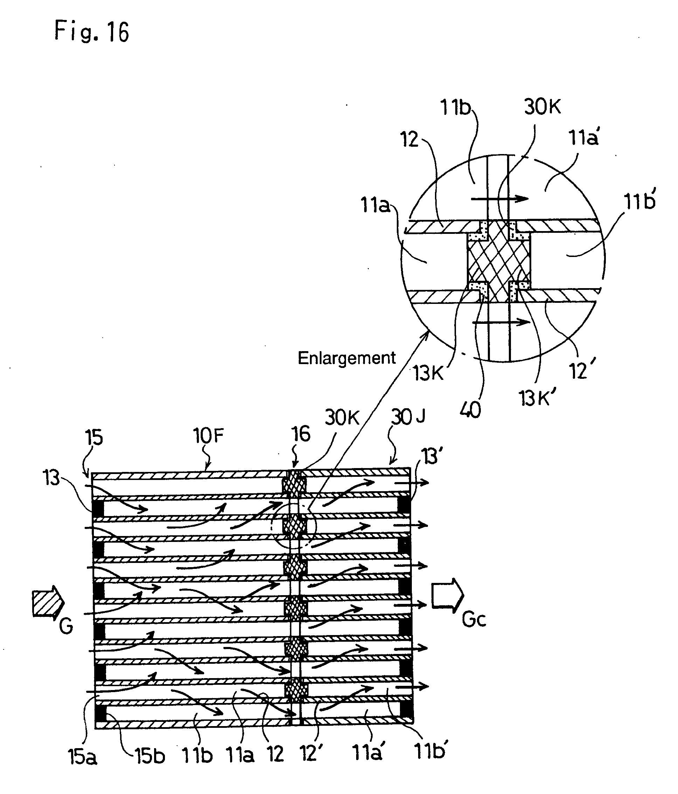

Still another composition shown in FIG. 16 resembles to the composition in FIG 14, and a stop seal plate 30K wherein stop seal protrusions 13K, 13K' are formed in zigzag on both face sides is bonded by adhesive 40 with the downstream side 16 of the first DPF 10F and the upstream side of the second DPF 30J. There, the radial heat conduction is promoted through the stop seal plate 30K.

And in these eighth embodiments, the boding by means of the adhesive 40 absorbs the difference of heat conductivity between the first DPFs 10F, 10G and the second DPFs 30H, 30I, 30J, or the aeration member 30F, the stop seal plate 30K.

If the composition is adopted, the upstream side first DPF 10F, 10G being composed of cordierite or other material showing a low heat conductivity, an excellent heat retention, and, a low heat capacity and an excellent heat elevation, become hot relatively rapidly, allowing to promote the combustion of PM. On the other hand, the downstream side second DPFs 30H, 30I, 30J being composed of silicone carbide, alumina or other ceramic material presenting a high heat conductivity, an excellent diffusivity, and, a large heat capacity and a mediocre heat elevation, allows to diffuse and accumulate heat, in order to avoid an abnormally high temperature.

Also, the disposition of an aeration member 30F or stop seal palte 30K which is a heat diffusion member between the first DPFs 10F, 10G and the second DPFs 30H, 30J, can promote the radial heat conduction.

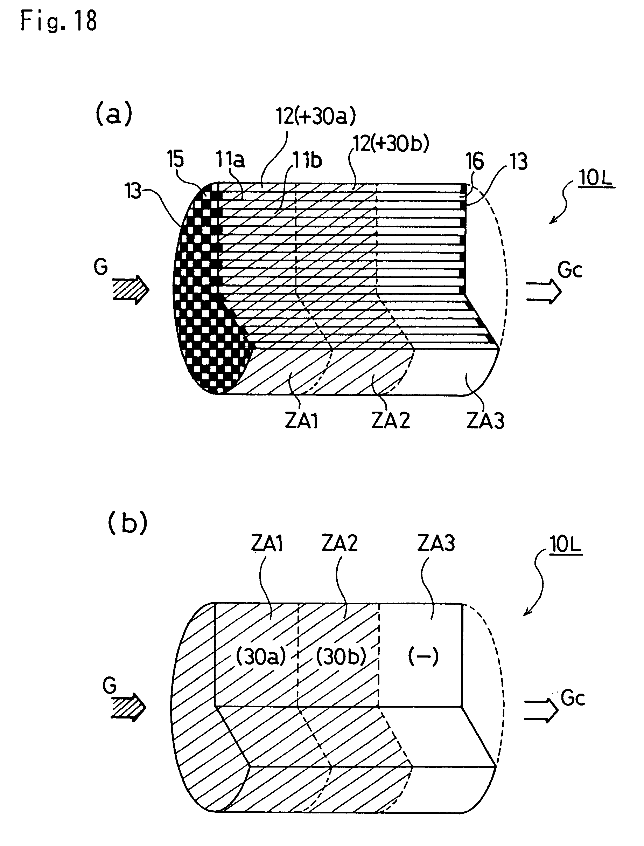

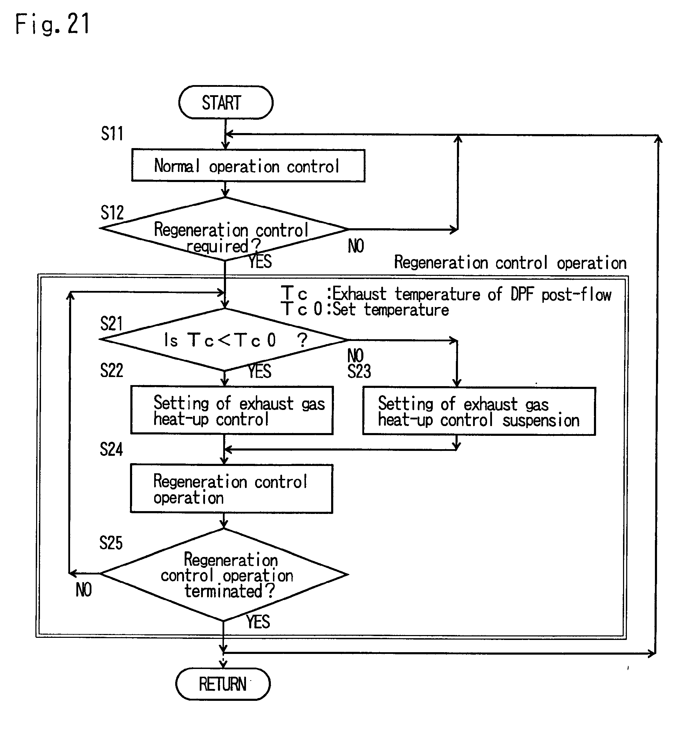

Next, the exhaust gas purification system of the ninth to fourteenth embodiments relating to the use of strong and weak catalyst oxidation power shall be described referring to FIG. 18 to FIG. 25.

As shown in FIG. 18 to FIG. 20, the wall flow type filter 10L. 10M, 10N has a number of exhaust gas passages (cells) 11 a, 11b whose periphery is formed of porous wall surface 12 and is formed by stop sealing in zigzag 13 the inlet side 15 and the outlet side 16 of the exhaust gas passage s11a, 11b.

Next, a catalyst 30a to 30d made of oxidation catalyst, or, oxidation catalyst and PM oxidation catalyst is applied to the wall surface of the exhaust gas passage 11a, 11b.

The oxidation catalyst is formed with a rear metal such as platinum, and is a catalyst for oxidizing nitrogen monoxide (NO) into nitrogen monoxide (NO₂) with oxygen (O₂) in the exhaust gas, and oxidizes PM with the generated NO₂. Moreover, the PM oxidation catalyst formed of cerium dioxide or the like, is a catalyst for directly oxidizing the PM by activating the oxide in the exhaust gas.

The exhaust gas G enters the exhaust gas passage 11 a from the inlet side 15, passes through the porous wall face 12, enters the exhaust gas passage 11b, and discharged from the outlet side 16 as purified exhaust gas Gc. During the passage through the porous wall face 12, PM in the exhaust gas, when it is hot, is purified through oxidation and combustion by the catalytic effect of the catalyst 30a to 30d applied to the porous wall surface 12. When cold, it is collected by the porous wall surface 12. Moreover, the collected PM is eliminated through oxidation and combustion by the catalytic effect of the catalyst 30a to 30d during the regeneration control operation.

In the DPF 10L of the ninth embodiment shown in FIG. 18, the oxidation power of the catalysts 30a, 30b to be disposed in the DPF 10L is composed so as to decrease in order and step-wise from the upstream to the downstream of the DPF 10L.

In short, as shown in FIG. 18, the DPF 10L is divided into an upstream side zone ZA1, an central portion zone ZA2 and a downstream side zone ZA3, from upstream to downstream, a strong oxidation power catalyst 30a is disposed by coating in the upstream side zone ZA1, a weak oxidation power catalyst 30b in the central portion zone ZA2 respectively, while the downstream side zone (downstream end portion) ZA3 is not coated with catalyst, so as to decrease the oxidation power in three stages.

The change of oxidation power of the catalyst 30a, 30b can be realized by changing the kind of catalyst, or even when the same catalyst is used, by changing the support concentration during the coating.

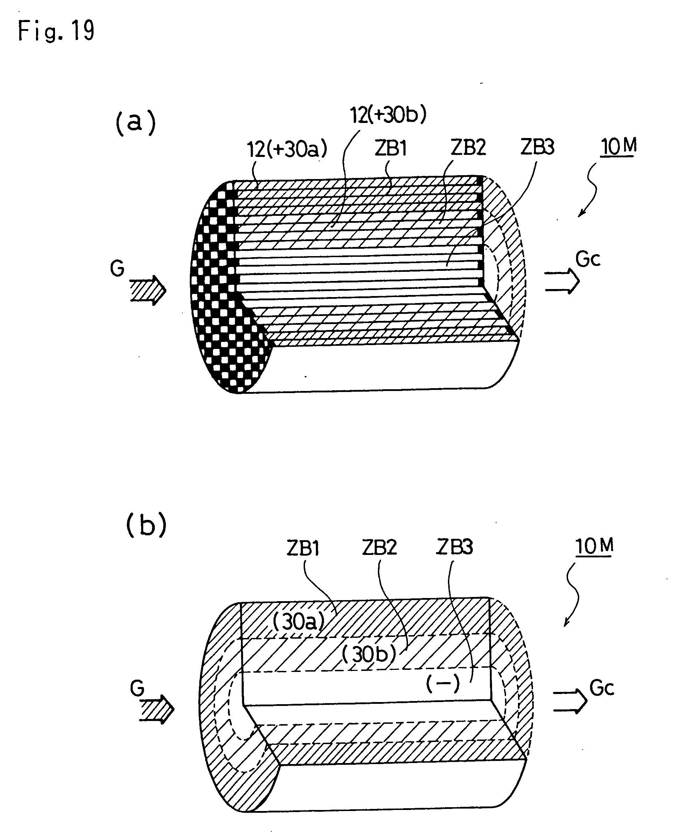

In the DPF 10M of the tenth embodiment shown in FIG. 19, the oxidation power of the catalysts 30a, 30b to be disposed in the DPF 10M is composed so as to decrease in order and step-wise, from the outer periphery towards the center of the DPF 10M.

In short, as shown in FIG. 19, the DPF 10M is divided into a cylindrical outer peripheral side zone ZB1, an intermediate tubular zone ZB2 and a central side zone ZB3, from the outer peripheral side to the central side, a strong oxidation power catalyst 30a is disposed by coating in the cylindrical outer peripheral side zone ZB1, a weak oxidation power catalyst 30b in the intermediate tubular zone ZB2 respectively, while the central side zone (center portion) ZB3 is not coated with catalyst, so as to decrease the oxidation power in three stages.

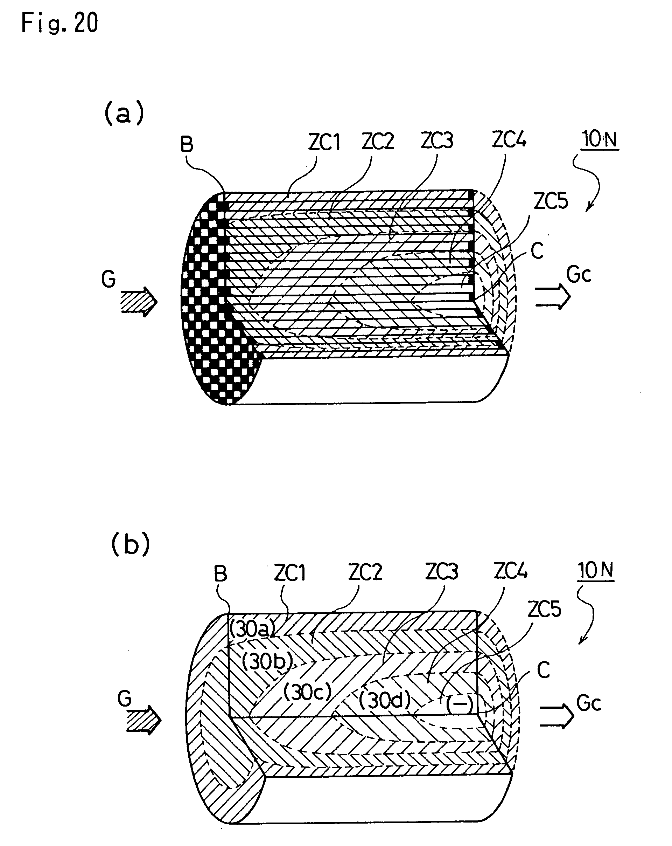

In the DPF 10N of the eleventh embodiment shown in FIG. 20, the oxidation power of the catalysts 30a-30d to be disposed in the DPF 10N is composed so as to decrease in order and step-wise from the outer peripheral portion B of the upstream end to the central portion C of the downstream end of the DPF 10N.

In short, as shown in FIG. 20, the DPF 10N is divided into several zones ZC1 to ZC5 by division lines approximating a parabola which is convex at the upstream side, from the outer peripheral portion B of the upstream end to the central portion C of the downstream end, and strong oxidation power catalysts 30a to 30d are disposed by coating consecutively, from the zone ZC1 near the outer peripheral portion of the upstream end. On the other hand, the zone ZC5 of the central portion of the downstream end is not coated with catalyst, so as to decrease the oxidation power in multiple stages (5 stages).

There, the DPF10L, 10M, 10N is used by incorporating in the exhaust gas purification system 1B, 1C or the like as shown in FIG. 33 or FIG. 34, according to the kinds of catalyst 30a to 30d.

Next, the DPF regeneration control in the exhaust gas purification system 1B, 1C or the like as shown in FIG. 33 or FIG. 34 incorporating these DPF10L, 10M, 10N shall now be described.

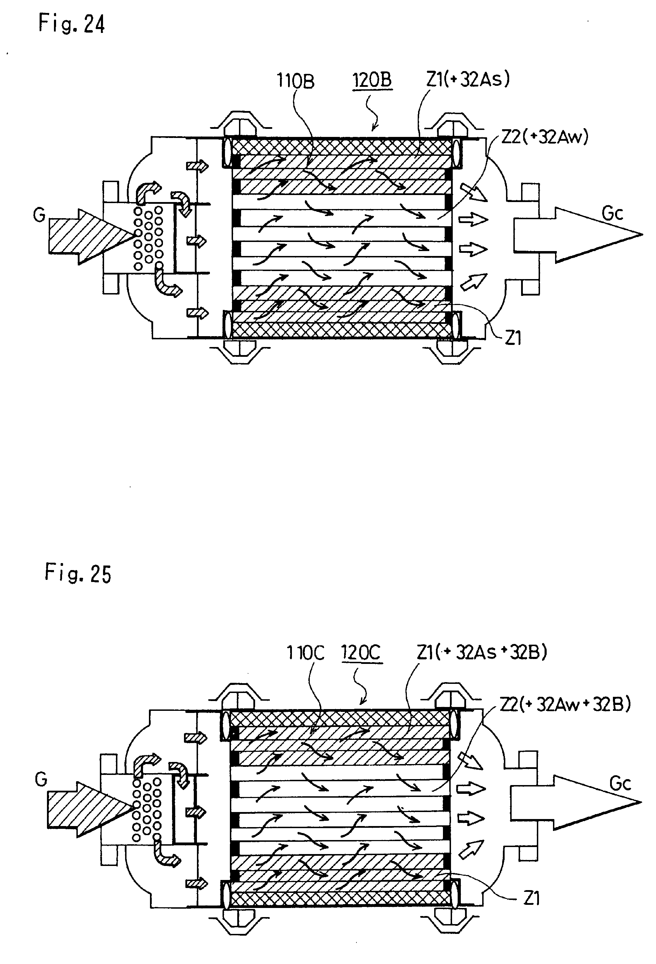

The DPF regeneration control is performed according to a regeneration control flow as shown in FIG. 25. The regeneration control flow is shown as a control flow to be executed in parallel with a main control flow for controlling the engine, or others. Consequently, when the engine operation is started, the flow is called from the main control flow to start, and the execution thereof is stopped, by interruption, at the same time at the engine operation stop command such as stopping the engine or others, it returns and goes back to the main control flow. It should be noted that the execution suspension portion by the interruption is not illustrated in the regeneration control flow of FIG. 25.

There, when the control flow starts, the normal operation is performed for a predetermined period of time in the step S11, before going to the step S12, it is judged if the filter requires the regeneration control or not, and if unnecessary, it returns to the normal operation of the step S11.

If it is judged that the filter regeneration control is required by the judgment in the step S12, it proceeds to the step S20 to perform the regeneration control operation.

In the regeneration control operation of the step S20, first, the downstream exhaust gas temperature Tc of the DPF is monitored to judge if it is lower than the set temperature Tc0 which would provoke DPF melting damage or destruction, and catalyst deterioration.

The exhaust gas heat-up control for filter regeneration is performed for a certain period of time and, in the judgment of the step S21, in case where the downstream exhaust gas temperature Tc of the DPF is lower than the set temperature Tc0, the exhaust gas heat-up control is set in the step S22 and it proceeds to the step S24, while in case where the exhaust gas temperature Tc exceeds the set temperature Tc0, the exhaust gas heat-up suspension is set in the step S23 and it proceeds to the step S24.

Then, the regeneration control operation is performed for a certain period of time in the step S24 according to the setting of the step S22 or step S23, it is to terminate or not the regeneration control operation and, if to terminate, it returns to the normal operation of the step S11 and if not to terminate, it returns to the step S21, to continue the regeneration control operation.

There, in the regeneration control operation, according to the DPF 10L, 10M, 10N of the aforementioned configuration, when oxidation and combustion of accumulated PM start, in portions of the DPF 10L, 10M, 10N where the catalyst 30a of strong oxidation power is disposed (portion ZA1 of the upstream side (inlet side), portion ZB1 of the outer peripheral side, portion of the upstream side (inlet side) and portion ZC1 of the outer peripheral side), oxidation and combustion of PM start, by the strong oxidation effect.

Then, heat generated by the PM oxidation is supplied to portions where catalysts 30b to 30d of low oxidation power are disposed potion (portion ZA2 of the downstream side (after-flow side), intermediate tubular zone ZB2, central portion side portions ZC2 to ZC4 of the downstream side) through heat conduction or others from the heated up exhaust gas, the upstream side or the outer peripheral side, even the catalysts 30b to 30d of low oxidation power and weak oxidation activate sufficiently, and the oxidation of PM is performed.

What is more, as the catalysts 30b to 30d of these portions, ZA2, ZB2, ZC2 to ZC4 are weak in oxidation power, a rapid PM oxidation is avoided, and melting damage, combustion loss, destruction of the DPF 10L, 10M, 10N or catalyst deterioration are also prevented.

As exhaust gas purification system of the twelfth embodiment, an exhaust gas purification system 120A in the case of application to a continuous regeneration type DPF system 1 U of NO₂ regeneration type DPF system shown in FIG. 32 shall be described.

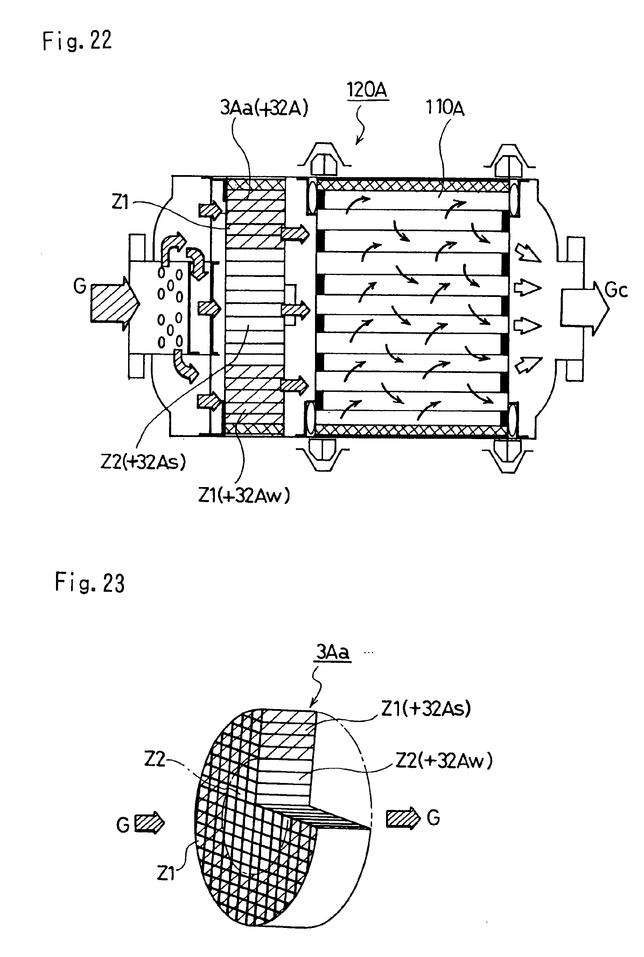

The exhaust gas purification system 120A shown in the FIG. 22 is a purifier using oxidation of particulate matter (PM) by NO₂, comprising an upstream oxidation catalyst converter 3Aa and a downstream wall flow type DPF 110A, wherein NO in the exhaust gas is oxidized by the upstream oxidation catalyst converter 3Aa and PM collected by the downstream DPF 110A is oxidized by the generated NO₂ into CO_{2,} to eliminate PM.

Here, the oxidation catalyst converter 3Aa is the one supporting an oxidation catalyst 32A (32As, 32Aw) in the exhaust gas passage of a honeycomb structure made of cordierite or ceramics, formed in a tubular shape where the exhaust gas G enters the upstream end portion and exits from the downstream end portion.

In this embodiment, as shown in FIG. 22 and FIG. 23, an outer peripheral side passage portion Z1 (hatched portion) of the oxidation catalyst converter 3Aa supports a strong oxidation catalyst 32As made of rear metal system oxidation catalyst or the like, while a central side passage portion Z2 (non hatched portion) supports a weak oxidation catalyst 32Aw made of oxide system oxidation catalyst or the like.

In addition, the cross-section area of the outer peripheral side passage portion Z1 supporting the strong oxidation catalyst 32As is set to 0.5 to 1.0 times of the cross-section area of the central side passage portion Z2 supporting the weak oxidation catalyst 32Aw in order to keep a good temperature distribution formation in the downstream side DPF 110 A, oxidation efficiency by the catalyst effect, thermal retention countermeasures or others in a good state.

And, the DPF 110A is also formed in a tubular shape where the exhaust gas G enters the upstream end portion and exits from the downstream end portion. The DPF 110A is made of a wall flow type filter 10X or others as shown in FIG. 35.

The wall flow type filter 10X, made of cordierite or ceramics, comprises a number of exhaust gas passages (cell) whose periphery is formed of porous wall surface 12 and an inlet side 15b and an outlet side 16b of the exhaust gas passage 11 a, 11b stop sealed in zigzag.

According to the exhaust gas purification system 120A of the composition, in the normal operation mode, as the outer peripheral side passage portion Z1 where the exhaust gas temperature tends to lower easily by heat radiation or others supports the strong oxidation catalyst, in the upstream side oxidation catalyst converter 3Aa, and therefore, the oxidation effect is enhanced, the oxidation reaction of PM or NO components or others contained in the exhaust gas is promoted, resulting in the elevation of the exhaust gas temperature.

At the same time, as the central side passage portion Z2 where the exhaust temperature tends to raise easily supports the weak oxidation catalyst, the oxidation effect is low, the oxidation reaction of PM or NO components or others contained in the exhaust gas is reduced, decreasing the elevation width of the exhaust gas temperature due to the oxidation reaction.

Consequently, the global temperature distribution of the oxidation catalyst converter 3Aa and the downstream side DPF 110A is equalized, in a way to enlarge the combustion area of PM in the exhaust gas, in the normal engine operation.

Also, in the regeneration mode operation, NO is produced in quantity and the exhaust temperature is raised, by changing the engine operation state, but when the exhaust gas passes through the oxidation catalyst converter 3Aa, the exhaust gas G in the outer peripheral side passage portion Z1 becomes hot through oxidation of NO and NO₂ is produced in quantity and, therefore, collected PM burns actively and the temperature raises rapidly in the outer peripheral side passage of the DPF 110A. Nonetheless, the outer peripheral side also cools down rapidly by radiation. On the other hand, the exhaust gas G passing through the central side passage portion Z2 and flowing in the central side passage of the DPF 110A is relatively cold and contains little NO₂ and, therefore, the caught PM burns slowly, preventing an abnormally high temperature.

Therefore, the temperature distribution in the DPF 110A is made uniform wholly and the abnormal high temperature parts is not caused during the regeneration mode operation, so the melting of the filter can be avoided.

Next, as exhaust gas purification system of the thirteenth embodiment, an exhaust gas purification system 120B in the case of application to a continuous regeneration type DPF system 1V of NO₂ regeneration type DPF system shown in FIG. 33 shall be described.

The exhaust gas purification system 120B shown in the FIG. 24 is a purifier wherein oxidation catalyst 32A (32As, 32Aw) is applied to the wall surface of the wall flow type filter with catalyst 110B to achieve oxidation of NO in the exhaust gas and PM oxidation by NO₂ generated by the oxidation, on the wall surface.

In this embodiment, a strong oxidation catalyst 32As made of rear metal system oxidation catalyst or the like and a weak oxidation catalyst 32Aw made of oxide system oxidation catalyst or the like are prepared, and as shown in FIG. 24, an outer peripheral side passage portion Z1 of the DPF 110B supports the strong oxidation catalyst 32As, while a central side passage portion Z2 supports the weak oxidation catalyst 32Aw respectively.

In addition, the cross-section area of the outer peripheral side passage portion Z1 supporting the strong oxidation catalyst 32As is set to 0.5 to 1.0 times of the cross-section area of the central side passage portion Z2 supporting the weak oxidation catalyst 32Aw in order to keep a good temperature distribution formation in the DPF 110 B, oxidation efficiency by the catalyst effect, or others in a good state.

According to the exhaust gas purification system 120B of the composition, in the normal operation mode, as the outer peripheral side passage portion Z1 supports the strong oxidation catalyst 32As, the oxidation reaction of components such as NO or others contained in the exhaust gas in the DPF 110B is promoted, resulting in the elevation of the exhaust gas temperature, while in the central side passage portion Z2 supporting the weak oxidation catalyst 32Aw, the oxidation reaction and the elevation exhaust gas temperature are reduced, and consequently, the global temperature distribution of the DPF 110B is equalized,.

Also, in the regeneration mode operation, the oxidation reaction of PM collected by DPF 110B is promoted in the outer peripheral side passage portion Z1 supporting the strong oxidation catalyst 32As and raises the filter temperature, while the oxidation reaction of collected PM is slow in the central side passage portion Z2 supporting the weak oxidation catalyst 32Aw, and consequently, the global temperature distribution of the DPF 110B is equalized. As a result, the filter melting damage due to an abnormally high temperature combustion that can happen easily during the regeneration operation can be prevented.

Also, as exhaust gas purification system of the fourteenth embodiment, an exhaust gas purification system 120C in the case of application to a continuous regeneration type DPF system 1W of NO₂ regeneration type DPF system shown in FIG. 34 shall be described.

The exhaust gas purification system 120C shown in the FIG. 25 is a purifier wherein oxidation catalyst 32A (32As, 32Aw) and PM oxidation catalyst 32B are applied to the wall surface of the wall flow type filter with PM oxidation catalyst 110C to achieve oxidation of PM from a temperature lower than the wall surface.

The PM oxidation catalyst 32B is a catalyst for oxidizing PM directly with O₂ in the exhaust gas and is made of cerium dioxide or others.

In the continuous regeneration type DPF system 1C, PM is oxidized with NO₂ using a reaction to oxidize NO of the oxidation catalyst 32A into NO₂, mainly, in the low temperature oxidation area (about 350 C° to 450 C°), PM is oxidized using a reaction to oxidize PM directly with O₂ in the exhaust gas O₂ of the PM oxidation catalyst 32B in the middle temperature oxidation area (about 400 C° to 600 C°), while PM is oxidized with O₂ in the exhaust gas, in the high temperature oxidation area (equal or superior to about 600 C°) higher than the temperature at which PM burns with O₂ in the exhaust gas.

In this embodiment, the oxidation catalyst 32A is composed so that a strong oxidation catalyst 32As made of rear metal system oxidation catalyst or the like and a weak oxidation catalyst 32Aw made of oxide system oxidation catalyst or the like are prepared, and an outer peripheral side passage portion Z1 of the DPF 110 C supports the strong oxidation catalyst 32As and the PM oxidation catalyst 32B, while a central side passage portion Z2 supports the weak oxidation catalyst 32Aw and the PM oxidation catalyst 32B respectively.

In addition, the cross-section area of the outer peripheral side passage portion Z1 supporting the strong oxidation catalyst 32As is set to 0.5 to 1.0 times of the cross-section area of the central side passage portion Z2 supporting the weak oxidation catalyst 32Aw in order to keep a good temperature distribution formation in the filter, oxidation efficiency by the catalyst effect or others in a good state.

According to the exhaust gas purification system 120C of the composition, the temperature distribution of the DPF 110C can be equalized, and as a result, the filter melting damage can be avoided by preventing an abnormally high temperature from generating.

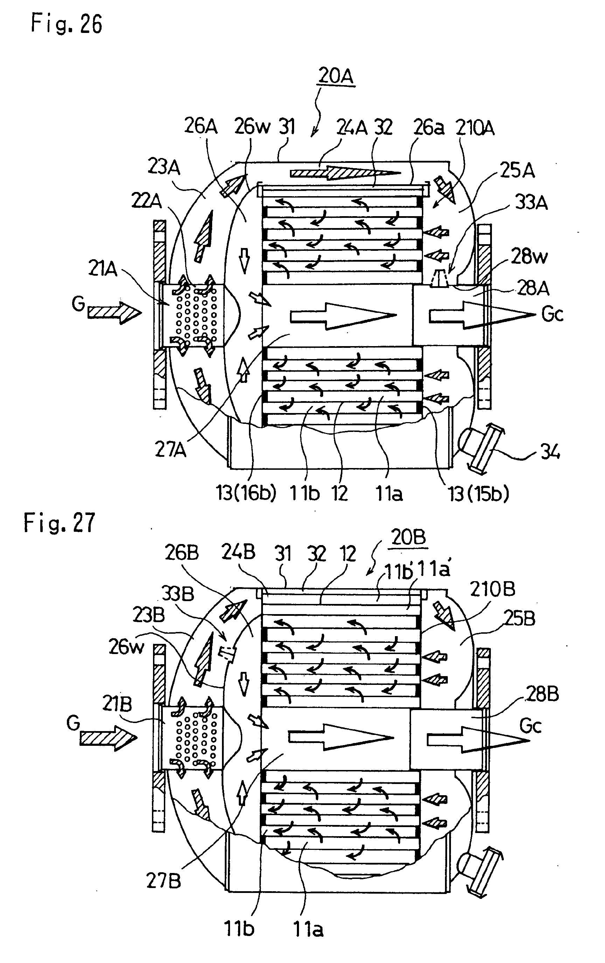

Also, the exhaust gas purification system of the fifteenth and sixteenth embodiments concerning the exhaust gas passage shall be described referring to FIG. 26 to FIG. 31.

As shown in FIG. 26 to FIG. 31, DPFs 210A to 210F used for the exhaust gas purification system 20A to 20F is composed of a wall flow type filter having a number of exhaust gas passages 11a, 11b whose periphery is formed of porous wall surface 12 and an inlet side 15b and an outlet side 16b of cells 11a, 11b constituting the exhaust gas passage stop sealed in zigzag 13, to be used incorporated in an exhaust gas purification system 1U, 1V, 1W or others as shown in FIG. 32 to FIG. 34. Consequently, the DPF 210A to 210F may be a normal DPF, or a DPF with a catalyst such as oxidation catalyst, namely catalytic DPF.

In the exhaust gas purification system 20 of the fifteenth embodiment shown in FIG. 26, a DPF 210A made of a wall flow type filter is formed into a tubular body such as cylindrical form or the like and an outer peripheral passage 24A is disposed at the outer peripheral portion of the tubular body and a central passage 27A in the central portion along the central axis respectively.

In addition, an outside chamber 25A communicating the outer peripheral passage 24A and the upstream side cell 11a is installed, and moreover, an inside chamber 26A communicating the downstream side cell 11b and the central passage 27A is provided. A gas inlet passage 23A is provided outside the inside chamber 26A, to communicate the gas inlet 21A and the outer peripheral passage 24A. A gas diffusion member 22A is disposed at the gas inlet 21A, and composed to diffuse equally the inflow exhaust gas G in the outer peripheral passage 24A. It should be noted that an ash discharge port 34 is disposed in the downstream portion of the outside chamber 25A in order to discharge ash accumulated in the outside chamber 25A.

Then, the exhaust gas passage is composed so that the exhaust gas G passes through the gas inlet 21A, gas diffusion member 22a, gas inlet passage 23A, outer peripheral passage 24A, outside chamber 25A, cell 11a, 11b, inside chamber 26A, central passage 27A, and gas outlet passage 28A in the order.

In short, it is so composed to make the exhaust gas G pass through the outer peripheral passage 24A before flowing in the upstream side cell 11a, downstream side cell 11b, and discharge the exhaust gas Gc purified by the porous wall face 12 between the upstream side cell 11a and the downstream side cell 11b out of the exhaust gas purification system 20A via the central passage 27A.

According to the composition, the outer peripheral side of the DPF 210A can be heated or kept warm by the exhaust gas G, by flowing the total amount of exhaust gas G through the outer peripheral passage 24A and then through the cells 11a, 11b of the DPF 210A, contributing to a further homogenization of the temperature distribution of the DPF 210A both in the engine normal mode operation and the DPF regeneration mode operation.

Next, in the composition of FIG. 26, the outer peripheral passage 24A is formed as a passage between the outer periphery of the DPF 210A and a case 31 of the exhaust gas purification system 20A, as a passage provided outside the DPF 210A. In the case, the outer peripheral side of the DPF 210A is fixedly supported by an inner wall 26a continuous to an inner chamber 26A through a DPF holding mat 32.

Thus, by adopting a composition of installing the outer peripheral passage 24A separately from the DPF 210A outside the DPF 210A, the filter portion more vulnerable than the other portions can be protected, and the expensive filter portion will not be damaged during transportation or installation of the exhaust gas purification system 20A, even if the outside or the exhaust gas purification system 20A is damaged.

Also, as shown in FIG. 27, the outer peripheral passage 24B can be formed by removing stop seals before and after several layers of cells 11a', 11b' in an inside area along the outer periphery of the tubular body of the DPF 210B. The composition of removing the stop seal 13 can be formed relatively easily, because it can be molded into a shape from which the stop seal 13 is taken out during the molding of the DPF 210B. In the case, the outer peripheral side of the DPF 210B comes to be held through the DPF holding mat 32.

Next, an oxidation catalyst is disposed in the outer peripheral passage 24B. The composition permits to heat the outer peripheral side of the DPF 210B with oxidation reaction heat by the oxidation catalyst. Also, the space for disposing the oxidation catalyst can be economized.

Concerning the disposition of oxidation catalyst on the outer peripheral passage 24B, it may be supported by the porous wall face 12 around the cell 11a', 11b' from which the stop seal 13 is taken out as shown in FIG. 27, or a porous support layer supporting the oxidation catalyst may be laminated on the porous wall face 12.

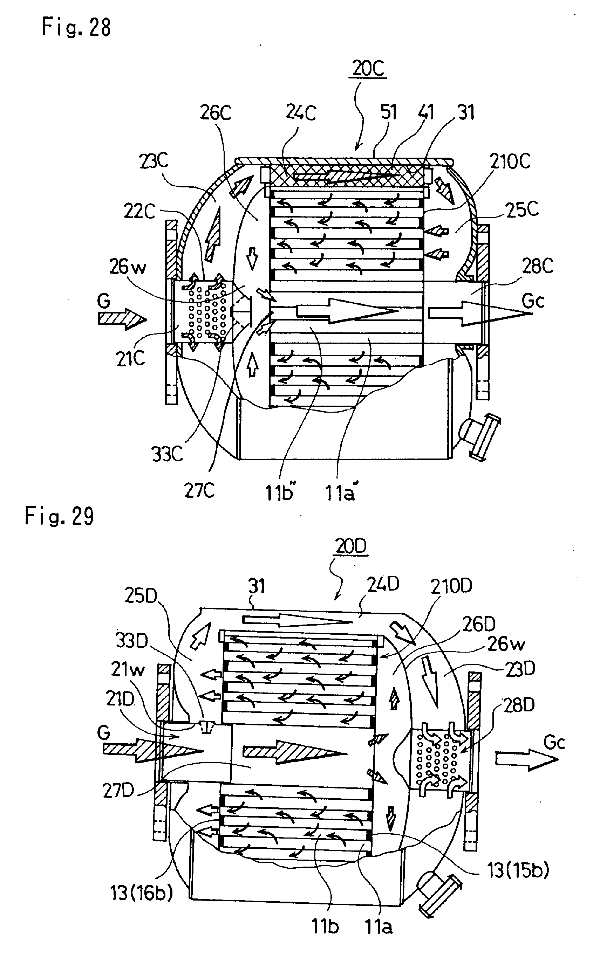

Or, as shown in FIG. 28, the outer peripheral passage 24C is formed as a passage between the outer periphery of the DPF 210C and a case 31 of the exhaust gas purification system 20C, and in the passage 24C, the oxidation catalyst is supported by a ceramic or metal honeycomb structure 41 formed separately from the DPF 210C, and the honeycomb structure 41 is disposed through insertion into the outer peripheral passage 24C. In the case, the oxidation support step can be cut off from the molding step of the DPF 210C and, moreover, the oxidation catalyst can be disposed relatively easily in the outer peripheral passage 24C.

Also, as for the central passages 27A, 27B, 27C, as shown in FIG. 26 and FIG. 27, an area along the central axis of a tubular body is formed hollow, and the hollow portion is taken as the central passage 27A, 27B, or as shown in FIG. 28, the central passage 27C is formed by removing stop seals before and after cells 11 a", 11b" in an area along the central axis of the tubular body.

As the central passages 27A, 27B, 27C are formed in a portion including the downstream side of the central portion where an extremely high temperate generates to create the DPF melting damage, in a DPF 10X of the prior art of FIG. 35, the melting damage which was encountered in the DPF 10X of the prior art can be avoided.

It should be noted that the combination of the composition of the outer peripheral passages 24A, 24B, 24C and the composition of the hollow passages 27A, 27B, 27C is made conveniently, compositions in FIG. 26 to FIG. 28 are nothing but exemplary, and the present invention is not limited to the combinations shown in these drawings.

Further, in the aforementioned exhaust gas purification systems 20A, 20B, 20C, relief valves 33A, 33B, 33C are disposed so that the exhaust gas G bypasses the DPFs 210A, 210B, 210C, when the clogging of the DPFs 210A, 210B, 210C progresses and increases the pressure.

The relief valves 33A, 33B, 33C are disposed, as shown in FIG. 26, on a passage wall 28w between an outside chamber 25A communicating the outer peripheral passage 24A and the upstream side cell 11a, and the gas outlet passage 28A, or, as shown in FIG. 27, on a passage wall 26w between an inside chamber 26B communicating the downstream side cell 11b and the central passage 27B and the gas inlet passage 23B. Otherwise, as shown in FIG. 28, it may be disposed in a portion inside the gas diffusion member 22C of the passage wall 26w between an inside chamber 26C communicating the downstream side cell 11b and the central passage 27C, and the gas inlet passage 23C.

The disposition of the relief valves 33A, 33B, 33C allows to avoid an excessive elevation of the engine exhaust pressure, by bypassing the filtration portion, when the DPFs 210A, 210B, 210C are clogged excessively by an abnormal accumulation of particulate matter.

In addition, if the relief valves 33A, 33B, 33C are disposed at the position of FIG. 26 to FIG. 28, the piping for arranging the relief valves 33A, 33B, 33C becomes unnecessary, making the exhaust gas purification system more compact.

Now, the exhaust gas purification system of the sixteenth embodiment shall be described.

In the exhaust gas purification system 20D of the sixteenth embodiment shown in FIG. 29, a wall flow type DPF 210D is formed into a tubular body such as cylindrical form or the like and an outer peripheral passage 24D is disposed at the outer peripheral portion of the tubular body and a central passage 27D in the central portion along the central axis respectively.

In addition, an inside chamber 26D communicating the central passage 27D and the upstream side cell 11a is provided, and an outside chamber 25D communicating the downstream side cell 11b and the outer peripheral passage 24D is installed. A gas outlet passage 23D is provided outside the inside chamber 26D, to communicate the gas outlet 28D and the outer peripheral passage 24D.

Then, in the sixteenth embodiment, as shown in FIG. 29, it is so composed that the exhaust gas G passes through the gas inlet 21D, central passage 27D, inside chamber 26D, cells 11 a, 11 b, outside chamber 25D, outer peripheral passage 24D, gas outlet passage 23D and gas outlet 28D in this order.

The composition of the sixteenth embodiment is different from the composition of the fifteenth composition in that the exhaust gas G passes through the central passage 27D before the cells 11a, 11b, and then through the outer peripheral passage 24D, and, the portion where oxidation catalyst is disposed in the central passage 27D.

Though, in the composition shown in FIG. 29 to FIG. 31, the outer peripheral passage 24D is disposed outside the DPF 210D as a passage between the outer periphery of the DPF 210D and the case 31; however, the outer peripheral passage may also be formed be removing stop seals before and after the cell in the area along the outer periphery of the tubular body of the DPF, as is the case for the composition of FIG. 27.

As for the central passage 27D, as shown in FIG. 29, an area along the central axis of a tubular body may be formed hollow, and the hollow portion may be taken as central passage 27D, or though not shown, it can be formed by removing stop seals before and after cells in an area along the central axis of the tubular body.

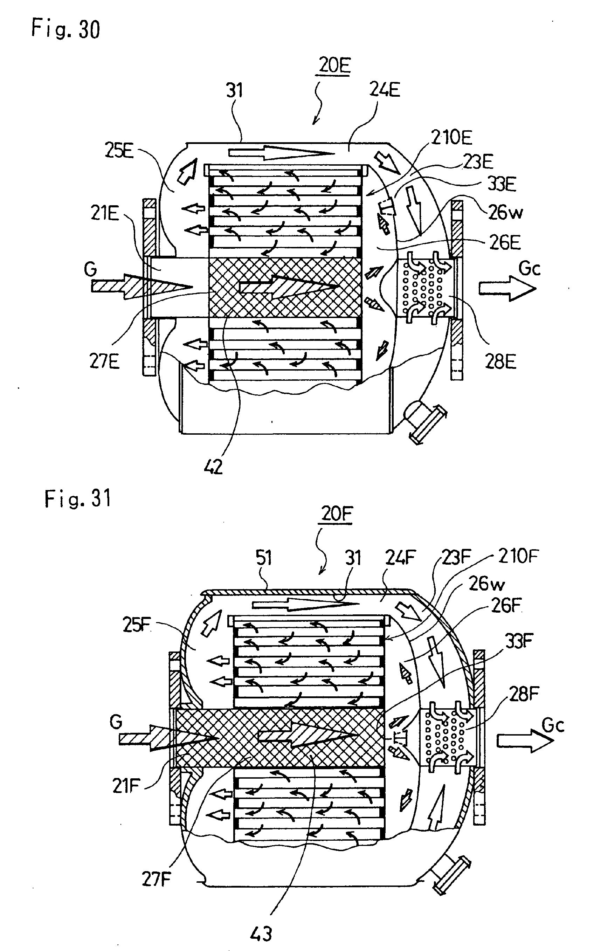

Next, as shown in FIG. 30, an oxidation catalyst is disposed in the central passage 27E. In the FIG. 30, the oxidation catalyst is supported by a ceramic or metal honeycomb structure 42 formed separately from the DPF 210E, and the honeycomb 42 is disposed through insertion into the central passage 27E of the DPF 210E. It should be noted that, in FIG. 31, the honeycomb 43 is disposed in connection with the member composing the gas inlet 21 F, and composed to be inserted into the central passage 27F of the DPF 210F during the assembly of the exhaust gas purification system 20F.

In addition, though not illustrated, the central passage may be formed by removing stop seals before and after cells in an area along the central axis of the tubular body, and the oxidation catalyst can be arranged in the central passage, by providing on the porous wall surface around the cell along the central axis of the tubular body, or, by laminating a porous support layer supporting oxidation catalyst on the porous wall surface.

Further, as shown in FIG. 31, disposition of a thermal insulation layer 51 on the outer surface of the case 31 of the DPF 20F can enhance the thermal retention effect and, at the same time, prevent thermal damage of peripheral vehicle components disposed outside by the heat. Besides, the thermal insulation layer 51 having also a normal noise reduction effect can serve for prevention of noise.

In these compositions of the sixteenth embodiment, as the central passages 27D, 27E, 27F are upstream, the exhaust gas flowing in the outer peripheral passages 24D, 24 E, 24F turns to be the purified exhaust gas Gc after having passed through the cell 11a, 11b, these exhaust gases G, Gc allow to retain heat and heat up the central portion and the outer peripheral portion of DPFs 210D, 210E, 210F.

In addition, if oxidation catalyst is disposed in the central passage 27E, the central portion of the DPF 210E can be heated with heat of the exhaust gas G and heat generated by oxidation reaction of substances in the exhaust gas G.

And, in the aforementioned exhaust gas purification systems 20D, 20E, 20F, a relief valve is disposed, so that the exhaust gas G bypasses the DPFs 210D, 210E, 210F, when the clogging of the DPFs 210D, 210E, 210F progress and increases the pressure.

The relief valves 33D, 33E, 33F are disposed, as shown in FIG. 29, on a passage wall 21w between an outside chamber 25D communicating the outer peripheral passage 24D and the downstream side cell 11b, and the gas inlet passage 21 D, or, as shown in FIG. 30, on a passage wall 26w between an inside chamber 26E communicating the upstream side cell 11 a and the central passage 27E, and the gas outlet passage 23E. Otherwise, as shown in FIG. 31, it may be disposed in a central portion of the passage wall 26w between an inside chamber 26F communicating the upstream side cell 11a and the central passage 27C, and the gas outlet passage 23F.

The disposition of the relief valves 33D, 33E, 33F allows to avoid an excessive elevation of the engine exhaust pressure, by bypassing the filtration portion, when the DPF s210D, 210E, 210F are clogged excessively by an abnormal accumulation of particulate matter.

## Claims

1. An exhaust gas purification system having a diesel particulate filter to purify particulate matter in the diesel engine exhaust gas, composed of an exhaust gas passage prevention structure installed in a portion where the PM in the exhaust gas is collected and accumulated easily and, at the same time, the temperature raises easily by oxidation of the accumulated PM, in said diesel particulate filter.

2. The exhaust gas purification system of claim 1, wherein said diesel particulate filter is a wall flow type filter having a number of exhaust gas passages whose periphery is formed of porous wall surface and inlet side and outlet side of the exhaust gas passage sealed in zigzag, and said exhaust gas passage prevention structure is installed against said exhaust gas passage of the central portion of the exhaust gas inflow cross-section of said filter and, at the same time, said exhaust gas passage prevention structure is stop sealed both at the upstream side and the downstream side of said exhaust gas passage.

3. The aforementioned exhaust gas purification system of claim 1, wherein said diesel particulate filter is a wall flow type filter having a number of exhaust gas passages whose periphery is formed of porous wall surface and inlet side and outlet side of the exhaust gas passage sealed in zigzag, and said exhaust gas passage prevention structure is installed against said exhaust gas passage of the central portion of the exhaust gas inflow cross-section of said filter and, at the same time, said exhaust gas passage prevention structure is made solid without the exhaust gas passage.

4. An exhaust gas purification system having a diesel particulate filter to purify particulate matter in the diesel engine exhaust gas, composed of a heat absorber installed in a portion where the PM in the exhaust gas is collected and accumulated easily and, at the same time, the temperature raises easily by oxidation of the accumulated PM, in said diesel particulate filter, or in a surrounding portion of the portion.

5. The exhaust gas purification system of claim 4, wherein said diesel particulate filter is a wall flow type filter having a number of exhaust gas passages whose periphery is formed of porous wall surface and inlet side and outlet side of the exhaust gas passage sealed in zigzag, and wherein said heat absorber is formed of a thick porous wall surface in the central portion of the exhaust gas inflow cross-section of said filter or the thick porous wall surface surrounding the central portion.

6. An exhaust gas purification system having a diesel particulate filter to purify particulate matter in the diesel engine exhaust gas, composed of a heat diffusing member, presenting a higher heat conductivity than the diesel particulate filter, disposed in contact with a portion where the PM in the exhaust gas is collected and accumulated easily and, at the same time, the temperature raises easily by oxidation of the accumulated PM, in said diesel particulate filter.

7. The exhaust gas purification system of claim 6, wherein said heat diffusing member is composed using metal, silicon nitride, and silicon carbide as material.

8. The exhaust gas purification system of claim 6 or 7, wherein said diesel particulate filter is a wall flow type filter having a number of exhaust gas passages whose periphery is formed of porous wall surface and upstream side and downstream side of the exhaust gas passage sealed in zigzag, and wherein said heat diffusing member is composed of a stop sealing plate for sealing said downstream side in zigzag.

9. The exhaust gas purification system of claim 6 or 7, wherein said heat diffusing member is composed of a member having a filter function.

10. The exhaust gas purification system of claim 9, wherein both of said diesel particulate filter and said heat diffusing member are composed of a wall flow type filter having a number of exhaust gas passages whose periphery is formed of porous wall surface, and wherein the upstream side and the downstream side of said exhaust gas passage are sealed in zigzag.

11. An exhaust gas purification system having a diesel particulate filter to purify particulate matter in the exhaust gas from a diesel engine by using a catalyst, wherein the oxidation power of said catalyst to be disposed in the diesel particulate filter is composed so as to decrease in order, step-wise or continuously, from the upstream to the downstream of the diesel particulate filter.

12. An exhaust gas purification system having a diesel particulate filter to purify particulate matter in the exhaust gas from a diesel engine by using a catalyst, wherein the oxidation power of said catalyst to be disposed in the diesel particulate filter is composed so as to decrease in order, step-wise or continuously, from the outer periphery towards the center side of the diesel particulate filter.

13. An exhaust gas purification system having a diesel particulate filter to purify particulate matter in the exhaust gas from a diesel engine by using a catalyst, wherein the oxidation power of said catalyst to be disposed in the diesel particulate filter is composed so as to decrease in order, step-wise or continuously, from the outer periphery of the upstream end towards the central portion of the downstream end of the diesel particulate filter.

14. The exhaust gas purification system of one of claims 11 to 13, wherein the oxidation power of said catalyst is changed in three or more stages, or, continuously and, at the same time, the portion of the lowest oxidation power of said catalyst is formed by not disposing said catalyst.

15. The exhaust gas purification system of one of claims 11 to 14, wherein said diesel particulate filter is a wall flow type filter having a number of exhaust gas passages whose periphery is formed of porous wall surface and, an inlet side and an outlet side of an exhaust gas passage sealed in zigzag.

16. An exhaust gas purification system comprising an oxidation catalyst converter in the upstream of the exhaust gas passage and a diesel particulate filter to purify particulate matter in the exhaust gas from a diesel engine in the downstream, wherein said oxidation catalyst converter and said diesel particulate filter are formed into a cylinder-shape in which the exhaust gas enters in the upstream end portion and exits from the downstream end portion and, at the same time, it is so composed that the outer peripheral passage portion of said oxidation catalyst converter supports a strong oxidation catalyst, and the central passage portion a weak oxidation catalyst respectively.

17. An exhaust gas purification system having a diesel particulate filter to purify particulate matter in the exhaust gas from a diesel engine in the exhaust gas passage and disposing an oxidation catalyst in the exhaust gas passage of said diesel particulate filter, wherein the diesel particulate filter is formed into a cylinder-shape in which the exhaust gas enters in the upstream end portion and exits from the downstream end portion and, at the same time, it is so composed that the outer peripheral passage portion of the diesel particulate filter supports a strong oxidation catalyst, and the central passage portion of the diesel particulate filter supports a weak oxidation catalyst respectively.

18. The exhaust gas purification system of claim 16 or 17, wherein said strong oxidation catalyst is made of a rear metal system oxidation catalyst, while said weak oxidation catalyst is made of an oxide system oxidation catalyst.

19. The exhaust gas purification system of claim 18, the transversal cross-section area of the outer peripheral passage portion supporting said strong oxidation catalyst is made into 0.5 to 1.0 time of the transversal cross-section area of the central passage portion supporting said weak oxidation catalyst.

20. The exhaust gas purification system of one of claims 16 to 19, wherein said diesel particulate filter is a wall flow type filter having a number of the exhaust gas passages whose periphery is formed of porous wall surface and an inlet side and an outlet side of the exhaust gas passage sealed in zigzag.

21. An exhaust gas purification system, wherein the diesel particulate filter to purify particulate matter in the exhaust gas from an engine is composed of a wall flow type filter having an inlet side and an outlet side of a plurality of cells whose periphery is formed of porous wall surface sealed in zigzag, and wherein an outer peripheral passage is disposed in the outer peripheral portion of said diesel particulate filter and a central passage in the central portion respectively, and it is so composed that exhaust gas passes through the gas inlet passage, said outer peripheral passage, said cells, said central passage and the gas exit passage in this order.

22. The exhaust gas purification system of claim 21, wherein the oxidation catalyst is disposed in said outer peripheral passage.

23. The exhaust gas purification system of claim 22, wherein the oxidation catalyst is supported by a ceramic or metal honeycomb structure formed separately from the diesel particulate filter and the honeycomb structure is disposed in said outer peripheral passage, for disposing an oxidation catalyst in the outer peripheral passage.

24. The exhaust gas purification system of one claims 21 to 23, wherein a relief valve is disposed at least one of a passage wall between an outside chamber communicating said outer peripheral passage with said cell and said gas exit passage, or a passage wall between an inside chamber communicating said cell and said central passage, and said gas inlet passage, so that the exhaust gas bypasses said filter, when the clogging of said filter progresses and increases the pressure.

25. An exhaust gas purification system, wherein the diesel particulate filter to purify particulate matter in the exhaust gas from an engine is composed of a wall flow type filter having an inlet side and an outlet side of a plurality of cells whose periphery is formed of porous wall surface sealed in zigzag, and wherein an outer peripheral passage is disposed in the outer peripheral portion of said diesel particulate filter and a central passage in the central portion respectively, and it is so composed that exhaust gas passes through the gas inlet passage, said central passage, said cells, said outer peripheral passage and the gas exit passage in this order.

26. The exhaust gas purification system of claim 25, wherein an oxidation catalyst is disposed in said central passage.

27. The exhaust gas purification system of claim 26, wherein, the oxidation catalyst is supported by a ceramic or metal honeycomb structure formed separately from the diesel particulate filter and said honeycomb structure is disposed in said central passage, for disposing an oxidation catalyst in said central passage.

28. The exhaust gas purification system of one of claims 21 to 23, wherein a relief valve is disposed at least one of a passage wall between an outside chamber communicating said cell and said outer peripheral passage and said gas inlet passage, or a passage wall between an inside chamber communicating said central passage and said cell, and said gas exit passage, so that the exhaust gas bypasses said filter, when the clogging of said filter progresses and increases the pressure.

29. The exhaust gas purification system of one of claim 21 to 28, wherein a thermal insulation layer is disposed on the outer surface of said exhaust gas purification system.
